# EUROPEAN PATENT SPECIFICATION

(11) **EP 4 338 345 B1**
(45) Date of publication and mention of the grant of the patent: **15.01.2025**
(21) Application number: 22724941.4
(22) Date of filing: 10.05.2022
(51) Int. Cl.: H04L 5/00

(54) **MULTI-STATES PHYSICAL DOWNLINK CONTROL CHANNEL MONITORING ADAPTATION**
ANPASSUNG DER ÜBERWACHUNG EINES PHYSIKALISCHEN DOWNLINK-STEUERKANALS MIT MEHREREN ZUSTÄNDEN
ADAPTATION DE SURVEILLANCE DE CANAL DE COMMANDE DE LIAISON DESCENDANTE PHYSIQUE MULTI-ÉTATS

(30) Priority: 11.05.2021 US 202163187019 P
(43) Date of publication of application: 20.03.2024
(73) Proprietor: Telefonaktiebolaget LM Ericsson (publ), 164 83 Stockholm (SE)
(72) Inventor: SHUBHI, Ilmiawan, 211 28 Malmö (SE); NIMBALKER, Ajit, Dublin, CA 94568 (US); NORY, Ravikiran, San José, California 95134 (US); MALEKI, Sina, 214 22 Malmö (SE)
(74) Representative: Ericsson
(86) International application number: PCT/SE2022/050454
(87) International publication number: WO 2022/240340

(56) References cited:
- US-A1- 2020 351 682
- US-A1- 2020 389 874
- MODERATOR (VIVO): "FL summary#2 of power saving for Active Time", vol. RAN WG1, no. e-Meeting; 20210125 - 20210205, 29 January 2021 (2021-01-29), XP051975974, Retrieved from the Internet <URL:https://ftp.3gpp.org/tsg_ran/WG1_RL1/TSGR1_104-e/Docs/R1-2101894.zip R1-2101894_8 7 2_summary_RAN1_104e_dci_p1_V020_IDCC_moderator.docx> [retrieved on 20210129]

## Description

### TECHNICAL FIELD

The present disclosure relates, in general, to wireless communications and, more particularly, systems and methods for multi-states Physical Downlink Control Channel (PDCCH) monitoring adaptation.

### BACKGROUND

Physical downlink control channel (PDCCH) monitoring in the active time is one of the most power-consuming activities in user equipment (UE). In fact, monitoring for PDCCH in the absence of data may be the dominant source of energy consumption in enhanced mobile broadband (eMBB) in typical scenarios. Considering this, techniques that can reduce unnecessary PDCCH monitoring occasions (MOs), i.e. allowing UE to go to sleep or wake-up only when required, can be beneficial.

During data transmission, it is desirable that the UE monitors PDCCH in every slot so that the UE always be ready for data transmission and, thus, delay of the transmission is minimized. This might not be beneficial, however, from the perspective of UE power consumption. In typical eMBB traffic scenarios, in particular, (one of the highest for UE energy consumption) is the unnecessary PDCCH monitoring during the inactivity timer (IAT). For example, the highest energy saving can be expected from reducing PDCCH monitoring during the IAT durations. During this duration, it is desirable to be in sparse monitoring such as, for example, every 2^{nd}, 4^{th}, or 8^{th} slot. Once the data burst comes in, the UE can then turn back to monitoring the PDCCH in every slot.

In Release 16, 3GPP introduced a search-space set group (SSSG) switching feature which is applicable for NR unlicensed (NR-U). The SSSG-switching mechanism is described in 38.213 v16.4.0.

Additional background information can be also found in the document MODERATOR (VIVO): "FL summary#2 of power saving for Active Time", 3GPP DRAFT; R1-2101894, vol. RAN WG1, no. e-Meeting; 20210125 - 20210205 29 January 2021 (2021-01-29).

In short, two groups of search space (SS)-sets can be configured in Rel-16. If configured (through the RRC parameters *searchSpaceGroupIdList-*r16 and *searchSpaceSwitchingGroup-r16*.), then the UE can be switched between these two groups using either explicit or implicit mechanisms. Some SSs may not appear in the SS-sets. Such SSs will always be monitored, and monitoring of such SSs is not impacted by the SSSG-switching mechanism.

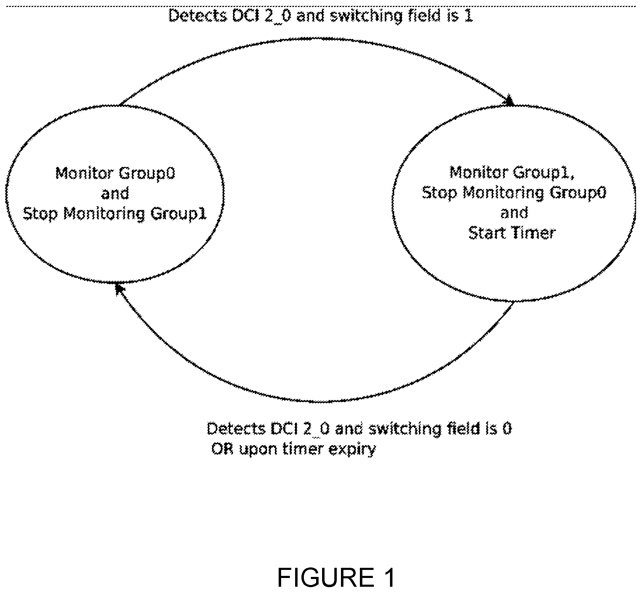

FIGURE 1 illustrates an explicit Search Space Set Switching Mechanism. Specifically, the UE can be switched between the two SSSGs through detection of DCI format 2_0. This is done by configuring the UE with the RRC parameter *searchSpaceSwitchTrigger-r16* which provides a location for the SSSG-switching field (for a serving cell) in the DCI format 2_0. The SSSG-switching field is one bit in size, where a bit value of zero indicates the first group and a value of one indicates the second group. These two groups may be referred to as group0 and group1, where the SSSG-switching field takes the values zero and one, respectively.

The procedure for explicit switching using DCI format 2_0 is as follows:
- If the UE is not monitoring PDCCH on SS-sets corresponding to group0 and the UE detects DCI format 2_0, then the UE switches to SS-sets of group0 provided the SSSG-switching field indicates a value of zero, and stops monitoring PDCCH on SS-sets associated with group1.
- If the UE is not monitoring PDCCH on SS-sets corresponding to group1 and the UE detects DCI format 2_0, then the UE switches to SS-sets of group1 provided the SSSG-switching field indicates a value of one. The UE also stops monitoring PDCCH on SS-sets corresponding to group0 and starts a timer with a duration provided by the *searchSpaceSwitchingTimer.*
- If the UE is monitoring PDCCH on SS-sets corresponding to group1, then the UE switches (or starts monitoring on) to SS-sets of group0 and stops monitoring on group1 at either expiration of the *searchSpaceSwitchingTimer* or at the last slot of a remaining channel occupancy duration for the serving cell that is indicated by DCI format 2_0.

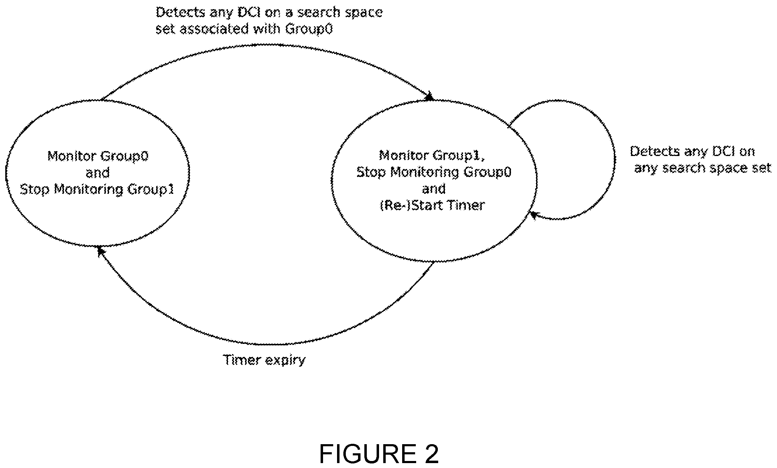

Implicit switching happens when the UE is not configured with the RRC *searchSpaceSwitchTrigger-r16* parameter. FIGURE 2 illustrates an implicit search space set switching mechanism. The procedure is as follows:
- If the UE detects a DCI format in group0, the UE switches to monitoring PDCCH according to SS-sets in group1 on the serving cell at a first slot that is at least P symbols after the slot in the active DL BWP. The UE sets the timer value to the value provided by *searchSpaceSwitchingTimer-r16* if the UE detects a DCI format by monitoring PDCCH in any SS-sets. This applies to every subsequent detection of a DCI in any SS; if the timer is running the UE restarts the timer.
- If the UE monitors SS-sets in group1, the UE switches to monitoring SS-sets in group0 at the beginning of the first slot that is at least P symbols after a slot where the timer expires or, if the UE is provided a search space set for DCI format 2_0, after the last slot of a remaining channel occupancy duration for the serving cell that is indicated by DCI format 2_0.

The second bullet above implies that even in the implicit case, it is still possible to enforce a SS-set switch from group 1 to group 0 given that the UE has been configured with a SS configuration for DCI format 2_0. However, note that DCI format 2_0 is configured in the common SS and potentially affects group transitions for all UEs with the same SFI-RNTI decoding the DCI; i.e. the SSSG-switching is not controlled on a UE-basis. Note that a UE can be configured with up to 10 search spaces.

Cell groups are defined for SSSG-switching such that if SS-set switching is triggered for one cell in the group of cells, it also triggers SS-set switching for all cells in the corresponding group. In Rel-16, four cell-groups are specified.

Exploiting the SSSG-switching for UE power-saving can be done, for example, by configuring the first SSSG (e.g., SSSGO) to have sparse PDCCH monitoring occasions (MOs) and the second SSSG (e.g., SSSG1) to have dense PDCCH MOs. The UE monitors PDCCH according to the first SSSG when there is no data burst and switch to SSSG1 when the data burst comes. The UE then can switch back to SSSG0 when the data burst ends.

Besides SSSG-switching, there is an interest in developing PDCCH-skipping for 3GPP Rel. 17 UE power saving. In PDCCH-skipping, the idea is to configure the UE with a certain skipping duration. If the UE receives the skipping indication, the UE may skip PDCCH monitoring for the configured duration. When the skipping duration ends, the UE then goes back to monitor the PDCCH according to the SSs.

In one alternative, PDCCH-skipping may be in terms of "one-shot" PDCCH-skipping. Here, the network (NW) will not send PDCCHs inside the PDCCH-skipping duration. Thus, the UE may omit PDCCH monitoring and sleep during the PDCCH-skipping duration.

In another alternative, PDCCH-skipping may also be in terms of "periodic" skipping, in which the UE is configured with a certain sleep-and-awake pattern, which may be called a skipping pattern. During the sleep part of the skipping pattern, the UE does not expect to receive PDCCH from the NW, and the UE can sleep during this duration. On the other hand, the UE needs to awake to monitor PDCCH during the awake duration of the pattern as the NW may send PDCCH in this duration.

In one approach, the UE may be configured with one skipping duration/pattern. In this case, the bit indication is used to determine whether the UE could skip monitor PDCCH or not. In another approach, the UE may be configured with more than one skipping duration or pattern. In this case, the bit combination in the skipping indication points out which skipping duration/pattern should be applied by the UE.

Due to the benefit that can be given by both PDCCH-skipping and SSSG-switching, certain previous methods and techniques have been disclosed to combine both features in one joint feature. Using this feature, the UE may be configured with an SSSG index for each configured SS to accommodate the SSSG-switching feature. On top of that, the UE may also in the same RRC configuration instance be configured with a certain skipping duration, i.e., to accommodate the PDCCH-skipping feature. Specifically, certain previous methods use a 2-bit indication to differentiate between the skipping and switching command. For example, the following bit combination can be used:
- 00 means "No change/unused"
- 01 means "Monitor PDCCH according to SS-set group0"
- 10 means "Monitor PDCCH according to SS-set group 1"
- 11 means "Skip PDCCH monitoring according to the skipping duration"

Certain problems exist, however. For example, several detail aspects are not yet covered by the previously disclosed methods and techniques. For example, the previously disclosed methods and techniques do not disclose:
- the mechanism that the UE should follow after the skipping duration ends.
- the mechanism for *searchSpaceSwitchTimer* (if configured) in this joint feature.
- possibilities in carrying other information in the adaptation indication bits.
- the impact of the uplink (UL) activities.
- application delay, i.e., a delay between the time of the UE receives adaptation indication and the time when the UE applies such indication.

A more complete mechanism in a joint PDCCH-skipping and SSSG-switching feature, therefore, is required.

### SUMMARY

Certain aspects of the present disclosure and their embodiments may provide solutions to these or other challenges. For example, according to certain embodiments, methods and systems are provided that relate to joint PDCCH-skipping and SSSG-switching.

Aspects of the present invention are provided in the independent claims. Preferred embodiments are provided in the dependent claims.

The scope of the present invention is determined by the scope of the appended claims.

The present invention, which is defined by the appended claims, provide one or more of the following technical advantages. For example, one technical advantage may be that certain embodiments provide a cleaner mechanism for the joint SSSG-switching and PDCCH-skipping can be achieved. Having such methods may bring UE power-saving while minimizing the impact on the throughput and/or delay.

Other advantages may be readily apparent to one having skill in the art. Certain embodiments may have none, some, or all of the recited advantages.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an explicit Search Space Set Switching Mechanism;
FIGURE 2 illustrates an implicit search space set switching mechanism;
FIGURE 3 illustrates an example wireless network, according to certain embodiments;
FIGURE 4 illustrates an example network node, according to certain embodiments;
FIGURE 5 illustrates an example wireless device, according to certain embodiments;
FIGURE 6 illustrate an example user equipment, according to certain embodiments;
FIGURE 7 illustrates a virtualization environment in which functions implemented by some embodiments may be virtualized, according to certain embodiments;
FIGURE 8 illustrates a telecommunication network connected via an intermediate network to a host computer, according to certain embodiments;
FIGURE 9 illustrates a generalized block diagram of a host computer communicating via a base station with a user equipment over a partially wireless connection, according to certain embodiments;
FIGURE 10 illustrates a method implemented in a communication system, according to one embodiment;
FIGURE 11 illustrates another method implemented in a communication system, according to one embodiment;
FIGURE 12 illustrates another method implemented in a communication system, according to one embodiment;
FIGURE 13 illustrates another method implemented in a communication system, according to one embodiment;
FIGURE 14 illustrates an example method by a wireless device, according to certain embodiments;
FIGURE 15 illustrates an example virtual apparatus, according to certain embodiments;
FIGURE 16 illustrates an example method by a network node, according to certain embodiments;
FIGURE 17 illustrates an example virtual apparatus, according to certain embodiments;
FIGURE 18 illustrates another example method by a wireless device, according to certain embodiments; and

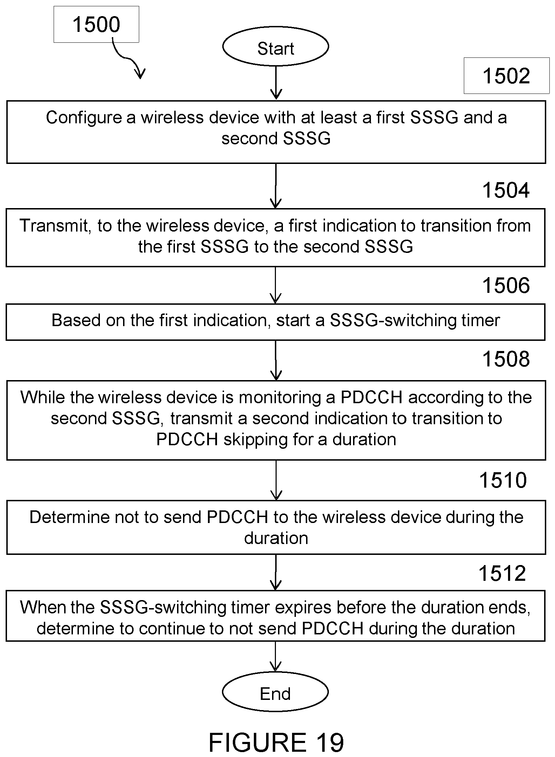

FIGURE 19 illustrates another example method by a network node, according to certain embodiments.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

The scope of the present invention is determined by the scope of the appended claims.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In some embodiments, a more general term "network node" may be used and may correspond to any type of radio network node or any network node, which communicates with a UE (directly or via another node) and/or with another network node. Examples of network nodes are NodeB, eNodeB (eNB), gNodeB (gNB) Master eNodeB (MeNB), a network node belonging to Master Cell Group (MCG) or Secondary Cell Group (SCG), base station (BS), multi-standard radio (MSR) radio node such as MSR BS, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node (e.g. Mobile Switching Center (MSC), Mobility Management Entity (MME), etc.), Operations & Maintenance (O&M), Operations Support System (OSS), Self Organizing Node (SON), positioning node (e.g. Evolved-Serving Mobile Location Center (E-SMLC)), Minimization of Drive Tests (MDT), test equipment (physical node or software), etc.

In some embodiments, the non-limiting term user equipment (UE) or wireless device may be used and may refer to any type of wireless device communicating with a network node and/or with another UE in a cellular or mobile communication system. Examples of UE are target device, device to device (D2D) UE, machine type UE or UE capable of machine to machine (M2M) communication, Personal Digital Assistant (PDA), Tablet, mobile terminals, smart phone, laptop embedded equipped (LEE), laptop mounted equipment (LME), Unified Serial Bus (USB) dongles, UE category M1, UE category M2, Proximity Services UE (ProSe UE), Vehicle-to-Vehicle UE (V2V UE), Vehicle-to-Vehicle UE (V2X UE), etc.

Additionally, terminologies such as base station/gNB and UE should be considered non-limiting and do in particular not imply a certain hierarchical relation between the two; in general, "gNB" could be considered as device 1 and "UE" could be considered as device 2 and these two devices communicate with each other over some radio channel. And in the following the transmitter or receiver could be either gNB or UE.

According to certain embodiments, methods and systems are provided that relate to joint PDCCH-skipping and SSSG-switching. Certain of the embodiments may relate to any one or more of:
- UE behavior related to the end of the skipping duration
- UE behavior related to the SSSG-switching timer
- The possible additional usage of the adaptation indication bits
- The impact of the UL activities to the PDCCH monitoring adaptation state
- The application delay of the transition between the PDCCH monitoring adaptation states.

For example, according to certain embodiments, a method is proposed for describing the relationship between each state of the PDCCH monitoring adaptation feature, where the PDCCH monitoring adaptation feature consists of PDCCH-skipping and SSSG-switching. Specifically, certain embodiments disclosed herein provide mechanisms for how the UE should transition between PDCCH monitoring adaptation states, in particular, for example, when the transition is initiated by conditions other than explicit DCI indication.

As another example, certain embodiments may provide possible additional information that can be contained in the DCI indication (on top of state transition indication is also given).

For example, according to certain embodiments, a method, implemented in a UE configured with more than two PDCCH monitoring states, may include:
- receiving configuration related to the PDCCH monitoring adaptation of the PDCCH monitoring states,
- monitoring (or not to monitor) PDCCH according to a first PDCCH monitoring state,
- receiving an indication to transition from the first PDCCH monitoring state to a second monitoring state, where the indication at least including one of:
   ▪ end of a skipping duration
   ▪ end of a switching timer
- monitoring (or not to monitor) PDCCH according to the second PDCCH monitoring state.

According to certain embodiments, a wireless device such as, for example, a UE is configured such as by, for example, RRC configurations, for one or more cells, or group of cells, or bandwidth parts (BWPs), with the first SSSG (e.g., SSSGO) and the second SSSG (e.g., SSSG1). In a particular embodiment, the wireless device may also be configured with a skipping duration. Here, in one example, the skipping duration can be counted starting from the time the UE receives the skipping indication. In another example, the skipping duration can be counted starting from the end of the application delay. Furthermore, the UE may also optionally be configured with a timer such as, for example, a SSSG-switching timer.

In a particular embodiment, for a power-saving purpose, the SSSG0 and the SSSG1 configured for the wireless device might be different at least in terms of their configured periodicities. Note that this arrangement should not be a limitation. Rather, the methods disclosed herein may also be applicable for other arrangements. For example, the network (NW) may configure the SSSG0 and the SSSG1 to have the same periodicities but different in other parameters such as, for example, offset, duration, AL, associated corset, monitoring symbols within the slot, SS type, associated DCI formats, etc.

As an example, the wireless device may be configured with the first SSSG containing SSs having dense PDCCH , and the second SSSG containing SSs having sparse PDCCH MOs. For example, first SSSG may include PDCCH monitoring in every slot, whereas the second SSSG includes PDCCH monitoring in every 4^{th} slot. The determination of the configuration of the first and second SS-set group (e.g., periodicity, duration, etc.) and the skipping duration, for example, can be based on the scheduling flexibility expected by the NW, QoS target, expected traffic, UE power saving metric, etc.

### UE behavior when skipping duration ends

When a wireless device enters a PDCCH-skipping state, the wireless device may skip PDCCH monitoring during the skipping duration. When the skipping duration ends, the wireless device should return to monitoring the PDCCH according to, at least, one of the SSSGs.

In one example embodiment, the wireless device may monitor PDCCH according to a predetermined SSSG such as, for example, that defined through a specification. For the case of when two SSSGs are configured, for example, the wireless device may be simply configured (e.g., through standardization) to monitor either according to SSSG0 or SSSG1 after the skipping duration ends.

In a particular embodiment, the wireless device may return to the SSSG that is associated with the denser PDCCH monitoring. Thus, where SSSG0 has denser monitoring that SSSG1, the wireless device will return to SSSG0 after the duration ends. Having the UE go to denser SSSG monitoring after PDCCH skipping is beneficial in minimizing the latency and throughput loss.

Further, when SSSG0 is used, the SSSG-switching timer does not restart (SSSGO is basically the default SSSG). Thus, the UE will always be in SSSG0 except if it is indicated to change to another SSSG via DCI. Therefore, it is easier to get synced between the NW and the UE. In addition, there may be different interpretations on the SSSG-switching timer behavior if SSSG1 is used.

Previously, it was not clear, whether the UE should resume PDCCH monitoring according to SSSG0 immediately after the SSSG-switching timer ends, or to wait until the skipping duration ends first before it resumes PDCCH monitoring. According to certain embodiments disclosed herein, the wireless device should finish the PDCCH skipping duration first. A reason for letting the UE finish the skipping duration first is that the skipping is indicated by a more specific codepoint in the DCI (codepoint that represents skipping). On the other hand, the SSSG-switching timer (re)starts when the UE is indicated with no-skipping, indicated with skipping, or indicated to switch to SSSG1 (or SSSG2 if configured). Thus, certain embodiments may provide the PDCCH skipping indication a higher priority than the SSSG transition indication.

In another example embodiment, the determination on which SS-set group the wireless device has to monitor PDCCH may depend on the status of the SSSG-switching timer. For example, if the SSSG-switching timer ends after the skipping duration ends, the wireless device may return to monitor PDCCH according to SSSGO; and if the SSSG-switching timer does not yet end after the skipping duration ends, the UE may return to monitor PDCCH according to SSSG1. In an additional example scenario, when returning to SSSG1, the UE may continue the SSSG-switching timer. In another example embodiment, when returning to SSSG1, the UE may restart the SSSG-switching timer.

In a related embodiment, the wireless device may monitor PDCCH in SSSG1, and receive a PDCCH skipping command with a duration, e.g., X ms. The wireless device may then stop monitoring PDCCH in SSSG1 for the X ms duration, and start monitoring SSSG0 within the skipping duration if the SS switching timer ends before the end of the X ms skipping duration if it is configured as such.

In another example embodiment, the wireless device may monitor PDCCH according to the SSSG from which the wireless device enters the PDCCH-skipping state. For example, if the wireless device monitors PDCCH according to the first SSSG (e.g., SSSGO) before receiving the PDCCH-skipping command, the wireless device will return monitoring PDCCH according to the first SSSG (e.g., SSSGO).

In yet another example embodiment, the determination in which the wireless device should monitor PDCCH can be configurable in the network, e.g., in the RRC configuration.

In an embodiment, for example, during the skipping duration, e.g., X ms, the wireless device may still perform the configured activities, e.g., periodic/semi-periodic CSI report, SRS transmission, RRM/RLM/BFD measurements, and configured grants remain in place for the wireless device. Alternatively, the wireless device may be allowed to relax one or more of such configured activities during the skip duration either by higher layer NW configuration or by pre-configuration, e.g., as in standardization documentations.

### Configuration and mechanism on the SS-set group switching timer

In addition to the SSSG index and skipping duration configuration, the wireless device may also be configured with a switching timer. The basic switching timer behavior, for example, can be based on the switching timer behavior of the SSSG switching feature of Release 16 NR-U, i.e., the wireless device will start (and restart) the switching timer when the wireless device receives an indication to monitor PDCCH according to SSSG1. The wireless device then returns to monitor PDCCH according to SSSG0 when the switching timer expires. The value of the switching timer can be, for example, based on QoS target, UE power-saving metric, expected traffic, etc.

In one example of embodiment, the wireless device may be currently monitoring PDCCH according to SSSG1 while the switching timer is running. The wireless device may then receive an indication to enter the PDCCH-skipping state. In one example, the wireless device may keep the switching timer counting irrespective of the PDCCH-skipping indication. In another example, the wireless device may also restart the switching timer when it receives a PDCCH-skipping indication. In yet another example, the wireless device may pause the switching timer during the skipping duration and continue counting when the skipping duration ends, and the wireless device returns monitoring PDCCH according to SSSG1.

In the NR-U SSSG-switching, the value of the switching timer is limited to a certain maximum value. This may not be beneficial when the network wants to rely on the DCI indication for switching between SSSGs. Therefore, in one example, a value of infinity may be added to the switching timer possible values. The wireless device configured with a switching timer with a value of inf may remain on the SSSG1, at least, until the IAT expires if it does not receive any explicit switching or skipping indication.

In another example embodiment, the network may have the option to not configure the switching timer. As such, the wireless device may receive a SSSG-switching/PDCCH skipping configuration without the switching timer, and thus the wireless device may remain in an indicated state until it is explicitly indicated otherwise by receiving a DCI or a pre-configured event, e.g., transmitting a PRACH, using a configured grant to transmit PUSCH, transmitting a UL request, detection of beam failure and this starting beam failure recovery procedure, etc.

In another example embodiment, the value of the configured SSSG-switching timer may be used as a restriction for the skipping duration. For example, if the wireless device is configured with an SSSG-switching timer with a value of X ms, the maximum value of the skipping duration is Y ms where Y < X.

In all the examples above, the UE may be configured with the switching timer and the corresponding behavior through higher layer signaling, e.g., RRC signaling.

### The usage of the bit indication

According to previously used and/or disclosed techniques, the bit indication is used either to switch to (or remain in) a certain SSSG or to indicate the UE that the UE could skip PDCCH monitoring for a certain duration.

According to certain embodiments proposed herein, the indication bits may also be used to bring additional information.

In one example, the different bit combinations may indicate different mechanisms related to the switching timer such as, for example, whether the switching timer should start (or restart). For example, a wireless device indicated by the first bit-combination may switch from the first SSSG (e.g., SSSGO) to the second SSSG (e.g., SSSG1) and starts the switching timer. On the other hand, if the wireless device receives a second bit-combination, the wireless device may switch from the first SSSG (e.g., SSSGO) to the second SSSG (e.g., SSSG1) and may not start the switching timer. For example, the following bit combination can be used when the wireless device is configured with 2-bit indication, 2 SSSGs, and one PDCCH-skipping duration.
- 00 means Monitor PDCCH according to SSSG0
- 01 means Monitor PDCCH according to SSSG1
- 10 means Monitor PDCCH according to SSSG1 and start (or restart) the switching timer
- 11 means Skip PDCCH monitoring according to the skipping duration

Switching to SSSG1 without activating the switching timer may be used by the network if the network wants the wireless device to remain in the SSSG1 until the IAT ends even when there is no data, i.e., the network wants to rely on the explicit DCI indication for PDCCH monitoring adaptation. On the other hand, switching to SSSG1 with starting the switching timer may be beneficial if the network wants to make sure that the UE will go to SS-set group0 if there is no data after a certain duration.

In another example embodiment, a wireless device, monitoring PDCCH according to the current SSSG, may be indicated by a first bit-combination to enter the PDCCH-skipping state and return to the first SSSG (e.g., SSSGO) when the skipping duration end. On the other hand, if the wireless device receives a second bit-combination, the wireless device may enter the PDCCH-skipping state and return to the second SSSG (e.g., SSSG1). For example, the following indications can be used:
- 00 means Monitor PDCCH according to SS-set group0
- 01 means Monitor PDCCH according to SS-set group 1
- 10 means Skip PDCCH monitoring according to the skipping duration and return to SS-set group0 when the skipping duration ends
- 11 means Skip PDCCH monitoring according to the skipping duration and return to SS-set group 1 when the skipping duration ends

In yet another example embodiment, one of the bit combinations may be used to indicate that both SSSGs need to be used for PDCCH monitoring adaptation. The wireless device may return to monitor PDCCH according to one of the SSSGs once it receives another indication, e.g., via DCI. For example, the following indications can be used.
- 00 means Monitor PDCCH according to both SS-set group0 and SS-set group 1
- 01 means Monitor PDCCH according to SS-set group0
- 10 means Monitor PDCCH according to SS-set group 1
- 11 means Skip PDCCH monitoring according to the skipping duration

Note that a combination of the above examples and, thus, more than 2 bits codepoint combinations is possible in certain embodiments. An example will be an additional bit for setting or unsetting the SS-set group switching timer.

### UL activity impact

When the wireless device transmits an uplink transmission to the network such as, for example, a scheduling request (SR), it is important that the network and the wireless device remain to be aligned after such occasion, i.e., either to remain in the current PDCCH monitoring adaptation state or to transit to other PDCCH monitoring state. The behavior related to this UL transmission may impact the performance of the wireless device both in terms of power consumption and delay.

In one straightforward example, the wireless device may remain on the current PDCCH monitoring adaptation state and change only if the wireless device receives other explicit or implicit indications (e.g., through DCI, end of the switching timer, end of the skipping duration, etc.). For example, if the wireless device is currently monitoring PDCCH according to SSSG0, the wireless device may remain to monitor PDCCH according to SSSG0.

In another example embodiment, the SSSG in which the wireless device should monitor the PDCCH can be preconfigured (e.g., through standardization). For example, if the network receives an UL transmission, the wireless device should monitor PDCCH either according to SSSG0 or according to SSSG1. In a particular embodiment, the wireless device may return to the SSSG with the denser PDCCH monitoring after an uplink transmission. Having the SR as a trigger to switch to the denser PDCCH monitoring (e.g., SSSG0 in a particular embodiment) may minimize latency.

In another example embodiment, if the wireless device is on the PDCCH-skipping state, and transmits UL transmission, the wireless device may return to monitor PDCCH according to the SSSG in which the wireless device monitors PDCCH before entering the PDCCH-skipping state.

In yet another example embodiment, the SSSG in which the wireless device should monitor the PDCCH can be configurable, e.g., in the RRC configuration.

In the examples above, in one more specific realization, an UL transmission by the wireless device is an UL transmission which leads to a response from the network in PDCCH, e.g., a UL scheduling request, and thus the wireless device has to follow the configured behaviors as described in above examples. However, a periodic UL transmission such as CSI report, or SRS transmission may not lead to any change as described above.

### Application delay

When the wireless device is transitioning from one PDCCH monitoring adaptation state to another PDCCH monitoring adaptation state, an application delay may incur. This is because, in general, the wireless device requires some duration to detect the adaptation indication.

In a particular embodiment, the application delay is equal for all of the transition and adaptation indications.

Here, the term equal may refer to time unit. For example, the application delay for all of the transitions for all of the possible adaptation indications is equal to K ms, or L slots, or M symbols. In a particular embodiment, the value of the application delay can be predetermined, e.g., through standardization. In another particular embodiment, the value of the application delay can be configurable, e.g., in the RRC configuration. Here, a restriction for the value may be applied, for example, based on the UE capability, numerology, etc. For example, although the value of the application delay is configurable, the value of the application delay for UE capability 1 may not be smaller than K ms.

In another example embodiment, the term equal may be in terms of the prerequisite of the application delay. For example, after indicated to transit to another PDCCH monitoring adaptation state, the wireless device may not transit to the indicated PDCCH monitoring adaptation state until the ACK of the last PDSCH is received.

In another example of embodiment, the application delay may be different depending on the PDCCH monitoring adaptation state in which the wireless device receives the adaptation indication and the indicated PDCCH monitoring adaptation state. In one example, the different application delay can be in terms of the time unit. For example, the transition from SSSG1 to SSSG0 may have an application delay of K1 ms while the transition from SSSG1 to PDCCH-skipping state may have an application delay of K2 ms. In one approach, these different values are preconfigured (e.g., through standardization). In another approach, the NW is allowed to configure more than one application delay, where each application delay may be associated with one or more transitions. In another example, the different application delay can be in terms of the prerequisite of the application delay. For example, a wireless device, monitoring PDCCH in SSSG1 and receives an indication to transit to the PDCCH-skipping, may wait until it transmits ACK for the last PDSCH before it could skip PDCCH monitoring for a duration. On the other hand, a wireless device, currently monitoring PDCCH in SSSG0, that receives an indication to switch to SSSG1 may do so directly, or may only need to wait for one or more symbols or slots before it could switch to SSSG1, i.e., without waiting for the time it transmits ACK to the network.

In another example of embodiment, the application delay may be different depending on the adaptation indication that is received by the wireless device. In one particular embodiment, the different application delay can be in terms of the time unit. For example, an adaptation indication via scheduling DCI may have an application delay of K1 ms while an adaptation indication due to the end of the PDCCH-skipping duration or SSSG-switching timer may imply an application delay of K2 ms. In one approach, these different values are preconfigured (e.g., through standardization). In another approach, the network is allowed to configure more than one application delay, where each application delay may be associated with one or more adaptation indications. In another example, the different application delay can be in terms of the prerequisite of the application delay. For example, a UE, monitoring PDCCH in the SSSG1 and is indicated to switch to SSSG0 via a scheduling DCI, may need to wait until it transmits ACK for the last PDSCH before it could switch to SSSG0. On the other hand, if such transition is indicated through the end of the switching timer, the UE may directly, or only need to wait for one or more symbols or slots before it could switch to SSSG0, i.e., without waiting for the time it transmits ACK to the network.

In yet another particular embodiment, the application delay may also be additionally based on the link/channel quality. For example, a wireless device indicated by a scheduling DCI to switch from SSSG0 to SSSG1 may need to wait until it transmits ACK before it could switch to SSSG1 if the link quality is below a certain threshold. On the other hand, if the link quality is equal to or higher than a certain threshold, the wireless device may switch directly, or may only need to wait for one or more symbols or slots before switching to SSSG1, i.e., without waiting for the time it transmits ACK to the network. In another example, the wireless device may have more than one application delay value (e.g., either in the standard or through RRC configuration), i.e., K1 slots and K2 slots. If the wireless device receives the adaptation indication while having channel quality equal to or higher than a certain threshold, the wireless device may apply K1 slots as the application delay. On the other hand, if the wireless device receives adaptation indication while having channel quality lower than a certain threshold, the wireless device may apply K2 slots as the application delay values.

### Additional aspects

As disclosed herein, the example is mainly mentioned for the case of PDCCH-skipping feature, which is implemented by configuring a certain skipping duration for the UE in the higher layer, e.g., RRC configuration. In one additional embodiment, the skipping may also be achieved by configuring a third SSSG (e.g., SSSG2) having SSs with no PDCCH MOs. Alternatively, the wireless device may be configured with a third SSSG having no SS.

During the application delay, it is possible that a (re)transmission occurs. In one example, this (re)transmission may extend the application delay. This will be beneficial, for example, as it could guarantee that the network could finish the retransmission, i.e., if there is PDSCHs transmission that is not successfully decoded by the wireless device. In another example, the extension of the application delay may depend on the type of transmission, e.g., based on the new data indicator (NDI). For example, if the transmission inside the application delay is a new transmission, the application delay is not extended. On the other hand, if the transmission inside the application delay is not a new transmission, the application delay will be extended. On top of that, the mechanism of the application delay may additionally be based on the state transition. For example, even if the transmission inside the application delay is retransmission, the application delay is not extended if the wireless device is switching from SSSG0 to SSSG1 while it is extended if the wireless device is switching from SSSG1 to SSSG0.

In the above example, the adaptation indication received by the wireless device is the same between the latest indication and the current adaptation indication. In another example, it is possible that the wireless device receives different adaptation indications during the application delay. In such a case, in one example of realization, the wireless device may consider the PDCCH containing the current adaptation indication is considered as not valid. In another example of realization, the wireless device may follow the current adaptation indication and cancel the previous adaptation indication. In yet another example embodiment, the different combination bit may refer to different behavior related to the application delay, i.e., whether to extend or not to extend the application delay. For example, a wireless device is indicated by the first PDCCH with a bit combination of 01 to switch from SSSG0 to SSSG1. During the application delay, if the wireless device receives a bit combination of 01 at the second PDCCH, the wireless device will extend the application delay, i.e., the wireless device will monitor PDCCH according to the SSSG1 X ms after it receives the second PDCCH. On the other hand, if during the application delay the wireless device receives a bit combination of 00 at the second PDCCH, the wireless device will not extend the application delay, i.e., the wireless device will monitor PDCCH according to the SSSG1 X ms after it receives the first PDCCH.

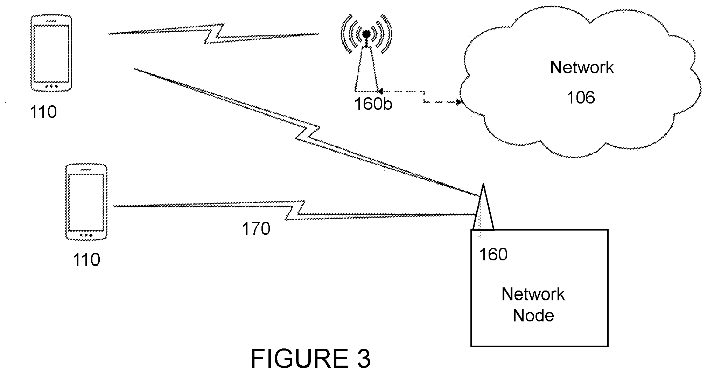

FIGURE 3 illustrates a wireless network, in accordance with some embodiments. Although the subject matter described herein may be implemented in any appropriate type of system using any suitable components, the embodiments disclosed herein are described in relation to a wireless network, such as the example wireless network illustrated in FIGURE 3. For simplicity, the wireless network of FIGURE 3 only depicts network 106, network nodes 160 and 160b, and wireless devices 110, 110b, and 1 10c. In practice, a wireless network may further include any additional elements suitable to support communication between wireless devices or between a wireless device and another communication device, such as a landline telephone, a service provider, or any other network node or end device. Of the illustrated components, network node0 and wireless device 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node0 and wireless device 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

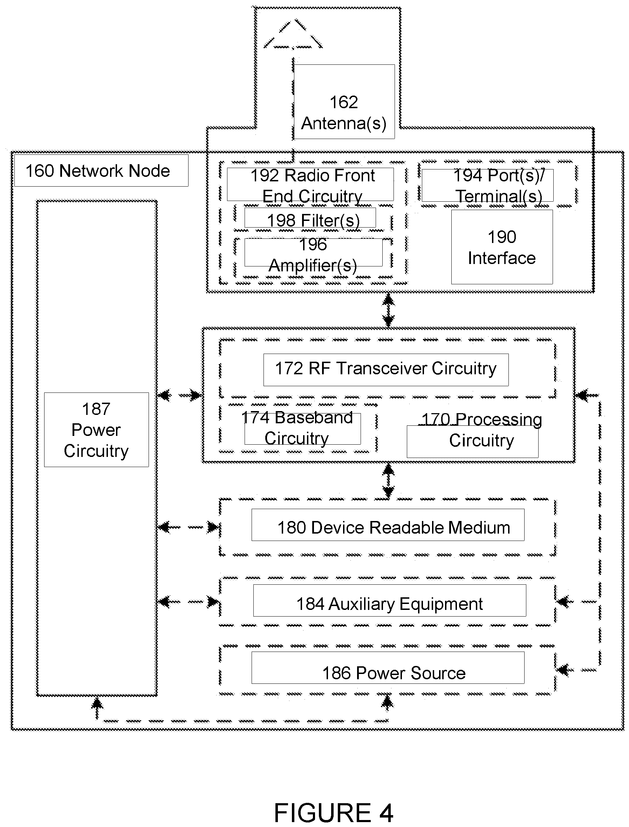

FIGURE 4 illustrates an example network node0, according to certain embodiments. As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), BSs (e.g., radio base stations, Node Bs, eNBs and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or RRUs, sometimes referred to as RRHs. Such remote radio units may or may not be integrated with an antenna as an antenna integrated radio. Parts of a distributed radio base station may also be referred to as nodes in a AS). Yet further examples of network nodes include MSR equipment such as MSR BSs, network controllers such as RNCs or BSCs, BTSs, transmission points, transmission nodes, multi-cell/multicast coordination entities (MCEs), core network nodes (e.g., MSCs, MMEs), O&M nodes, OSS nodes, SON nodes, positioning nodes (e.g., E-SMI,Cs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 4, network node0 includes processing circuitry 170, device readable medium 180, interface 190, auxiliary equipment 184, power source 186, power circuitry 187, and antenna 162. Although network node0 illustrated in the example wireless network of FIGURE 4 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node0 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node0 may be composed of multiple physically separate components (e.g., a NodeB component and a RNC component, or a BTS component and a BSC component, etc.), which may each have their own respective components. In certain scenarios in which network node0 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node0 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node0 may also include multiple sets of the various illustrated components for different wireless technologies integrated into network node0, such as, for example, GSM, WCDMA, LTE, NR, WiFi, or Bluetooth wireless technologies. These wireless technologies may be integrated into the same or different chip or set of chips and other components within network node0.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node0 components, such as device readable medium 180, network node0 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units.

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node0 but are enjoyed by network node0 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node0. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node0, network 106, and/or wireless devices 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or wireless devices via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node0 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node0 and may be connectable to network node0 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node0 with power for performing the functionality described herein. Power circuitry 187 may receive power from power source 186. Power source 186 and/or power circuitry 187 may be configured to provide power to the various components of network node0 in a form suitable for the respective components (e.g., at a voltage and current level needed for each respective component). Power source 186 may either be included in, or external to, power circuitry 187 and/or network node0. For example, network node0 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node0 may include additional components beyond those shown in FIGURE 4 that may be responsible for providing certain aspects of the network node's functionality, including any of the functionality described herein and/or any functionality necessary to support the subject matter described herein. For example, network node0 may include user interface equipment to allow input of information into network node0 and to allow output of information from network node0. This may allow a user to perform diagnostic, maintenance, repair, and other administrative functions for network node0.

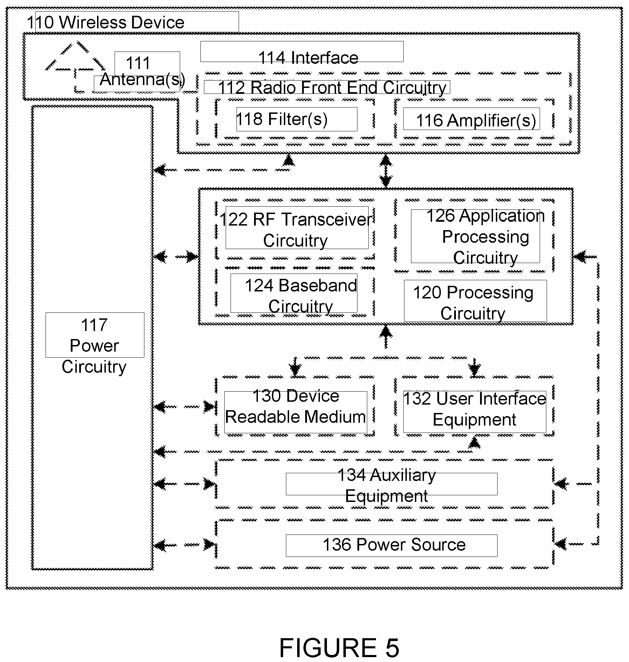

FIGURE 5 illustrates an example wireless device 110. According to certain embodiments. As used herein, wireless device refers to a device capable, configured, arranged and/or operable to communicate wirelessly with network nodes and/or other wireless devices. Unless otherwise noted, the term wireless device may be used interchangeably herein with UE. Communicating wirelessly may involve transmitting and/or receiving wireless signals using electromagnetic waves, radio waves, infrared waves, and/or other types of signals suitable for conveying information through air. In some embodiments, a wireless device may be configured to transmit and/or receive information without direct human interaction. For instance, a wireless device may be designed to transmit information to a network on a predetermined schedule, when triggered by an internal or external event, or in response to requests from the network. Examples of a wireless device include, but are not limited to, a smart phone, a mobile phone, a cell phone, a voice over IP (VoIP) phone, a wireless local loop phone, a desktop computer, a PDA, a wireless cameras, a gaming console or device, a music storage device, a playback appliance, a wearable terminal device, a wireless endpoint, a mobile station, a tablet, a laptop, a LEE, a ME), a smart device, a wireless CPE, a vehicle-mounted wireless terminal device, etc. A wireless device may support D2D communication, for example by implementing a 3GPP standard for sidelink communication, V2V, vehicle-to-infrastructure (V2I), 2X) and may in this case be referred to as a D2D communication device. As yet another specific example, in an Internet of Things (IoT) scenario, a wireless device may represent a machine or other device that performs monitoring and/or measurements and transmits the results of such monitoring and/or measurements to another wireless device and/or a network node. The wireless device may in this case be a machine-to-machine (M2M) device, which may in a 3GPP context be referred to as an MTC device. As one particular example, the wireless device may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a wireless device may represent a vehicle or other equipment that is capable of monitoring and/or reporting on its operational status or other functions associated with its operation. A wireless device as described above may represent the endpoint of a wireless connection, in which case the device may be referred to as a wireless terminal. Furthermore, a wireless device as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. Wireless device 110 may include multiple sets of one or more of the illustrated components for different wireless technologies supported by wireless device 110, such as, for example, GSM, WCDMA, LTE, NR, WiFi, WiMAX, or Bluetooth wireless technologies, just to mention a few. These wireless technologies may be integrated into the same or different chips or set of chips as other components within wireless device 110.

Antenna 111 may include one or more antennas or antenna arrays, configured to send and/or receive wireless signals, and is connected to interface 114. In certain alternative embodiments, antenna 111 may be separate from wireless device 110 and be connectable to wireless device 110 through an interface or port. Antenna 111, interface 114, and/or processing circuitry 120 may be configured to perform any receiving or transmitting operations described herein as being performed by a wireless device. Any information, data and/or signals may be received from a network node and/or another wireless device. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120 and is configured to condition signals communicated between antenna 111 and processing circuitry 120. Radio front end circuitry 112 may be coupled to or a part of antenna 111. In some embodiments, wireless device 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or wireless devices via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other wireless device 110 components, such as device readable medium 130, wireless device 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of wireless device 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a wireless device may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of wireless device 110, but are enjoyed by wireless device 110 as a whole, and/or by end users and the wireless network generally.

Processing circuitry 120 may be configured to perform any determining, calculating, or similar operations (e.g., certain obtaining operations) described herein as being performed by a wireless device. These operations, as performed by processing circuitry 120, may include processing information obtained by processing circuitry 120 by, for example, converting the obtained information into other information, comparing the obtained information or converted information to information stored by wireless device 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with wireless device 110. Such interaction may be of many forms, such as visual, audial, tactile, etc. User interface equipment 132 may be operable to produce output to the user and to allow the user to provide input to wireless device 110. The type of interaction may vary depending on the type of user interface equipment 132 installed in wireless device 110. For example, if wireless device 110 is a smart phone, the interaction may be via a touch screen; if wireless device 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into wireless device 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from wireless device 110, and to allow processing circuitry 120 to output information from wireless device 110. User interface equipment 132 may include, for example, a speaker, a display, vibrating circuitry, a USB port, a headphone interface, or other output circuitry. Using one or more input and output interfaces, devices, and circuits, of user interface equipment 132, wireless device 110 may communicate with end users and/or the wireless network and allow them to benefit from the functionality described herein.

Auxiliary equipment 134 is operable to provide more specific functionality which may not be generally performed by wireless devices. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. wireless device 110 may further comprise power circuitry 137 for delivering power from power source 136 to the various parts of wireless device 110 which need power from power source 136 to carry out any functionality described or indicated herein. Power circuitry 137 may in certain embodiments comprise power management circuitry. Power circuitry 137 may additionally or alternatively be operable to receive power from an external power source; in which case wireless device 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of wireless device 110 to which power is supplied.

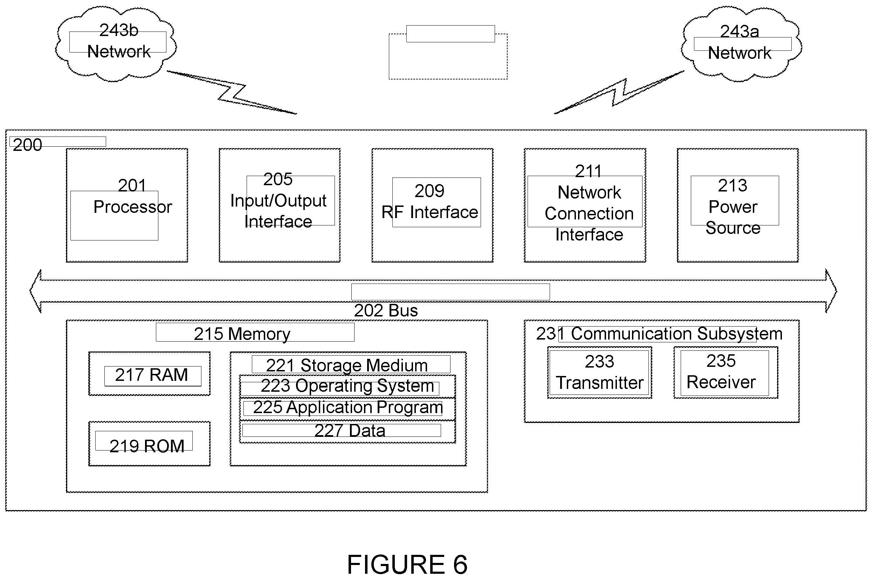

FIGURE 6 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3GPP, including a NB-IoT UE, a machine type communication (MTC) UE, and/or an enhanced MTC (eMTC) UE. UE 200, as illustrated in FIGURE 4, is one example of a wireless device configured for communication in accordance with one or more communication standards promulgated by the 3GPP, such as 3GPP's GSM, UMTS, LTE, and/or 5G standards. As mentioned previously, the term wireless device and UE may be used interchangeable. Accordingly, although FIGURE 6 is a UE, the components discussed herein are equally applicable to a wireless device, and vice-versa.

In FIGURE 6, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 6, or only a subset of the components. The level of integration between the components may vary from one UE to another UE. Further, certain UEs may contain multiple instances of a component, such as multiple processors, memories, transceivers, transmitters, receivers, etc.

In FIGURE 6, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 6, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a LAN, a WAN, a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to offload data, or to upload data. An article of manufacture, such as one utilizing a communication system may be tangibly embodied in storage medium 221, which may comprise a device readable medium.

In FIGURE 6, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another wireless device, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

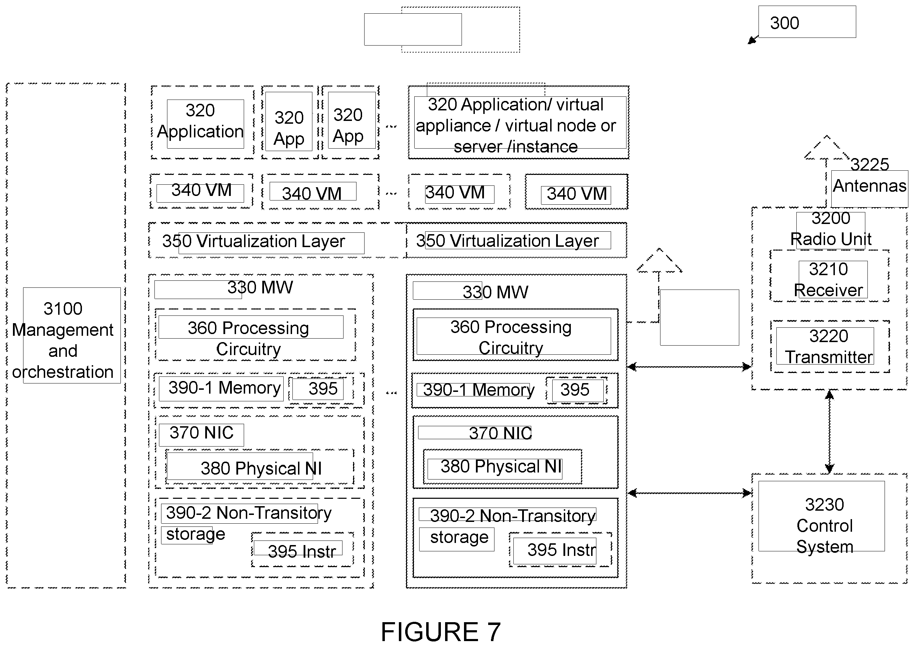

FIGURE 7 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 7, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 7.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be affected with the use of control system 3230 which may alternatively be used for communication between the hardware nodes 330 and radio units 3200.

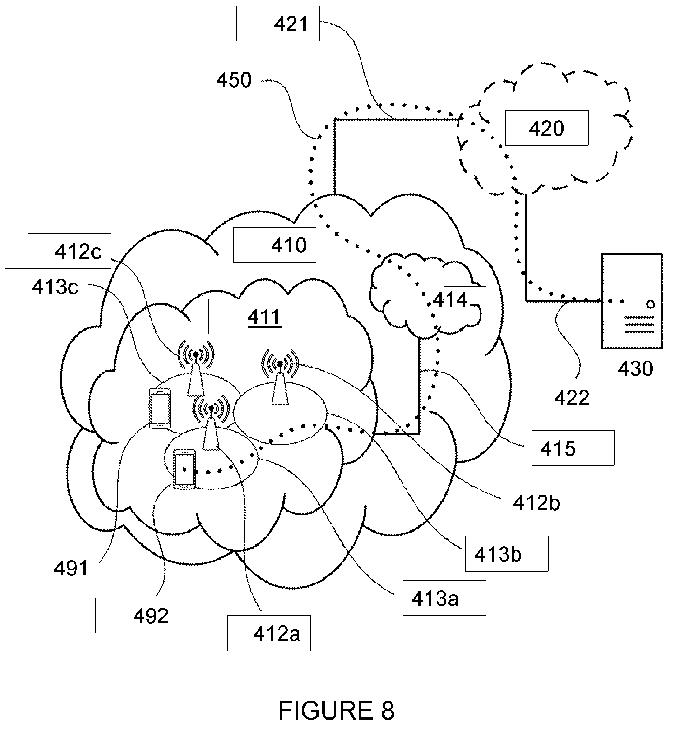

FIGURE 8 illustrates a telecommunication network connected via an intermediate network to a host computer in accordance with some embodiments.

With reference to FIGURE 8, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 8 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

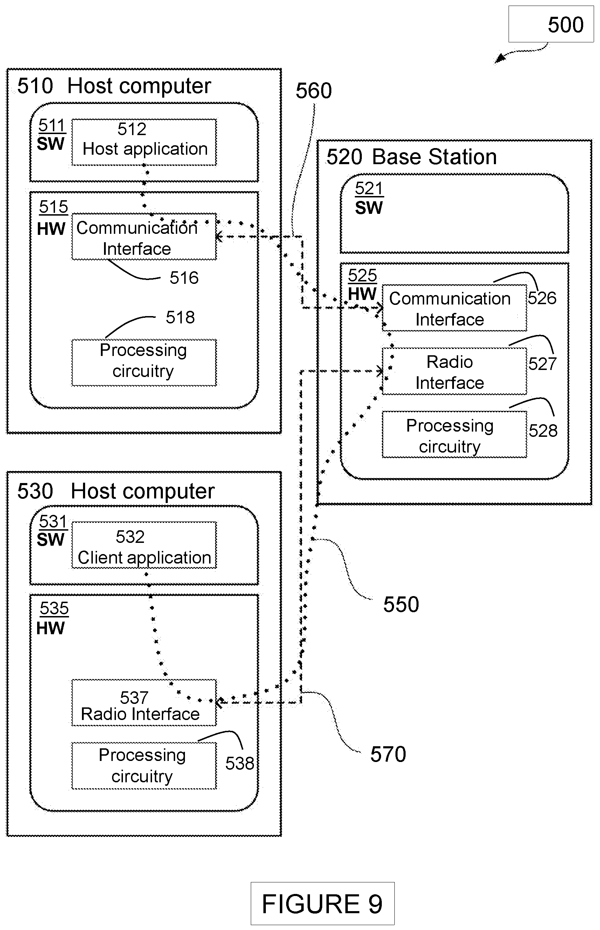

FIGURE 9 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to FIGURE 9. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 9) served by base station 520. Communication interface 526 may be configured to facilitate connection 560 to host computer 510. Connection 560 may be direct or it may pass through a core network (not shown in FIGURE 9) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 9 may be similar or identical to host computer 430, one of base stations 412a, 412b, 412c and one of UEs 491, 492 of FIGURE 8, respectively. This is to say, the inner workings of these entities may be as shown in FIGURE 9 and independently, the surrounding network topology may be that of FIGURE 8.

In FIGURE 9, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the data rate, latency, and/or power consumption and thereby provide benefits such as reduced user waiting time, relaxed restriction on file size, better responsiveness, and/or extended battery lifetime.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

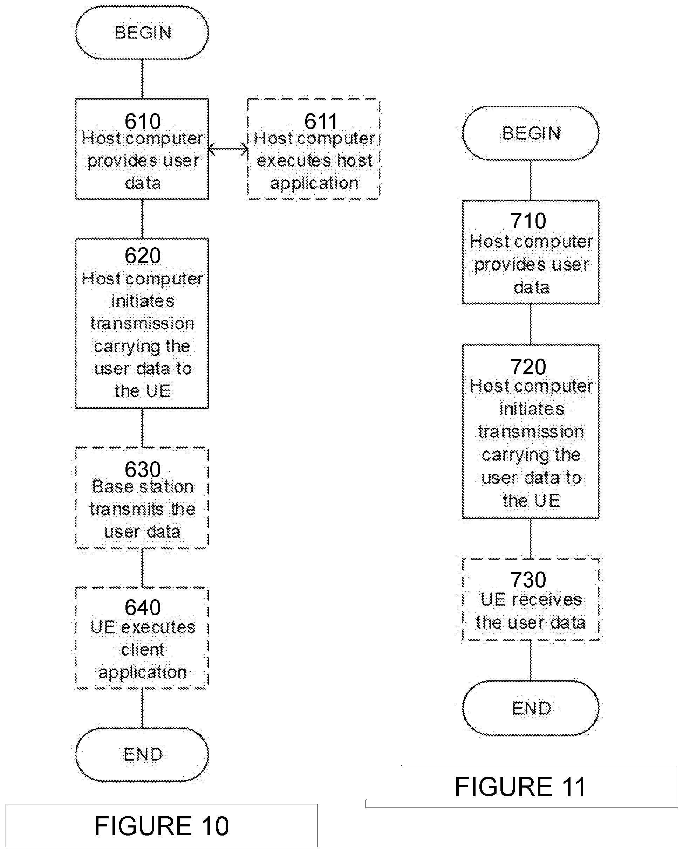

FIGURE 10 is a flowchart illustrating a method implemented in a communication system, in accordance with one embodiment. The communication system includes a host computer, a base station and a UE which may be those described with reference to FIGURES 8 and 9. For simplicity of the present disclosure, only drawing references to FIGURE 10 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

IGURE 11 is a flowchart illustrating a method implemented in a communication system, in accordance with one embodiment. The communication system includes a host computer, a base station and a UE which may be those described with reference to FIGURES 8 and 9. For simplicity of the present disclosure, only drawing references to FIGURE 11 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

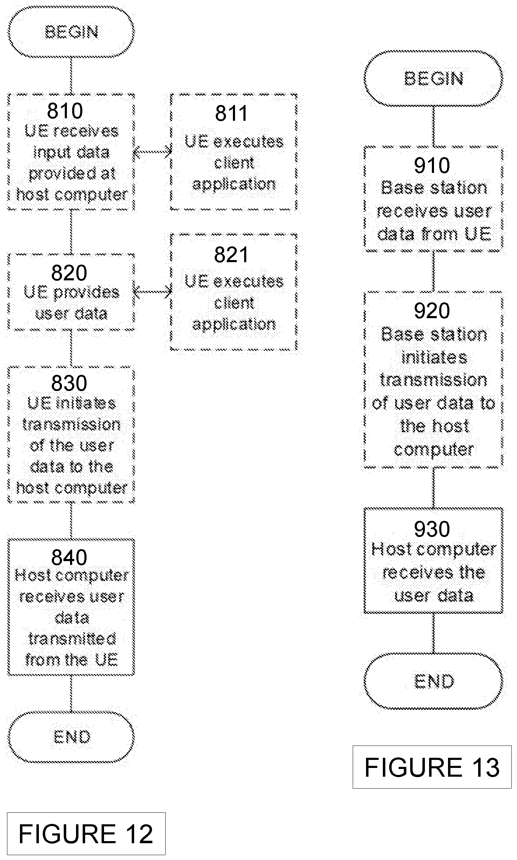

FIGURE 12 is a flowchart illustrating a method implemented in a communication system, in accordance with one embodiment. The communication system includes a host computer, a base station and a UE which may be those described with reference to FIGURES 8 and 9. For simplicity of the present disclosure, only drawing references to FIGURE 12 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 13 is a flowchart illustrating a method implemented in a communication system, in accordance with one embodiment. The communication system includes a host computer, a base station and a UE which may be those described with reference to FIGURES 8 and 9. For simplicity of the present disclosure, only drawing references to FIGURE 13 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

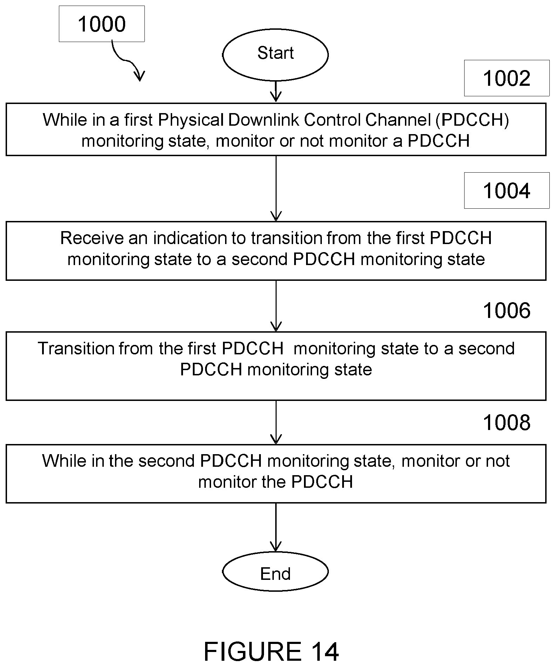

FIGURE 14 depicts a method 1000 by a wireless device 110, according to certain embodiments. At step 1002, while in a first PDCCH monitoring state, the wireless device monitors or not monitors a PDCCH. At step 1004, the wireless device receives an indication to transition from the first PDCCH monitoring state to a second PDCCH monitoring state. At step 1006, the wireless device transitions from the first PDCCH monitoring state to the second PDCCH monitoring state. At step 1008, while in the second PDCCH monitoring state, the wireless device monitors or not monitors the PDCCH.

In various particular embodiments, the method may additionally or alternatively include one or more of the steps or features of the Group A, Group C, and Group E Example Embodiments described below.

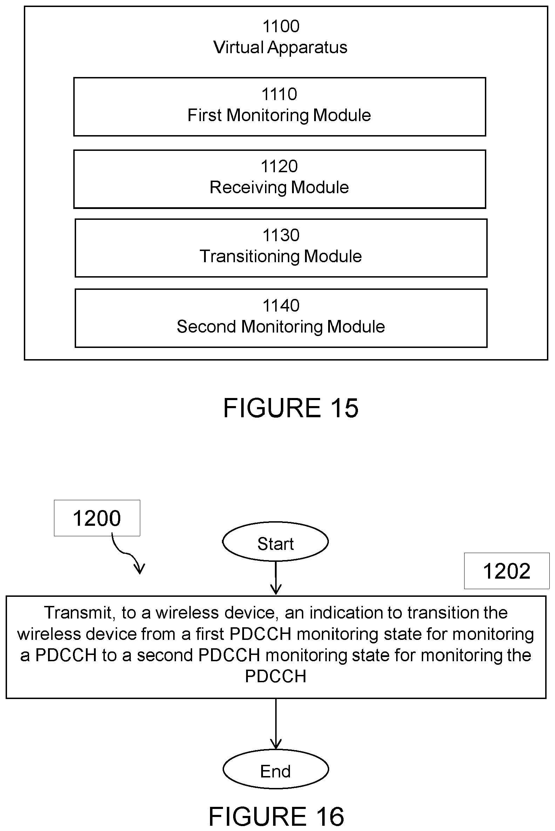

FIGURE 15 illustrates a schematic block diagram of a virtual apparatus 1100 in a wireless network (for example, the wireless network shown in FIGURE 3). The apparatus may be implemented in a wireless device or network node (e.g., wireless device 110 or network node0 shown in FIGURE 3). Apparatus 1100 is operable to carry out the example method described with reference to FIGURE 14 and possibly any other processes or methods disclosed herein. It is also to be understood that the method of FIGURE 14 is not necessarily carried out solely by apparatus 1100. At least some operations of the method can be performed by one or more other entities.

Virtual Apparatus 1100 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause first monitoring module 1110, receiving module 1120, transitioning module 1130, second monitoring module M40, and any other suitable units of apparatus 1100 to perform corresponding functions according one or more embodiments of the present disclosure.

According to certain embodiments, first monitoring module 1110 may perform certain of the monitoring functions of the apparatus 1100. For example, first monitoring module 1110 may monitor or not monitor the PDCCH while in a first PDCCH monitoring state.

According to certain embodiments, receiving module 1120 may perform certain of the receiving functions of the apparatus 1100. For example, receiving module 1120 may receive an indication to transition from the first PDCCH monitoring state to a second PDCCH monitoring state.

According to certain embodiments, transitioning module 1130 may perform certain of the transitioning functions of the apparatus 1100. For example, transitioning module 1130 may transition from the first PDCCH monitoring state to the second PDCCH monitoring state.

According to certain embodiments, second monitoring module 1140 may perform certain of the monitoring functions of the apparatus 1100. For example, second monitoring module 1140 may monitor monitors or not monitors the PDCCH while in the second PDCCH monitoring state.

Optionally, in particular embodiments, virtual apparatus may additionally include one or more modules for performing any of the steps or providing any of the features in the Group A, Group C, and Group E Example Embodiments described below.

As used herein, the term module or unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

FIGURE 16 depicts a method 1200 by a network node0, according to certain embodiments. At step 1202, the network node transmits, to a wireless device, an indication to transition the wireless device from a first PDCCH monitoring state for monitoring a PDCCH to a second PDCCH monitoring state for monitoring the PDCCH.

In various particular embodiments, the method may include one or more of any of the steps or features of the Group B, Group D, and Group E Example Embodiments described below.

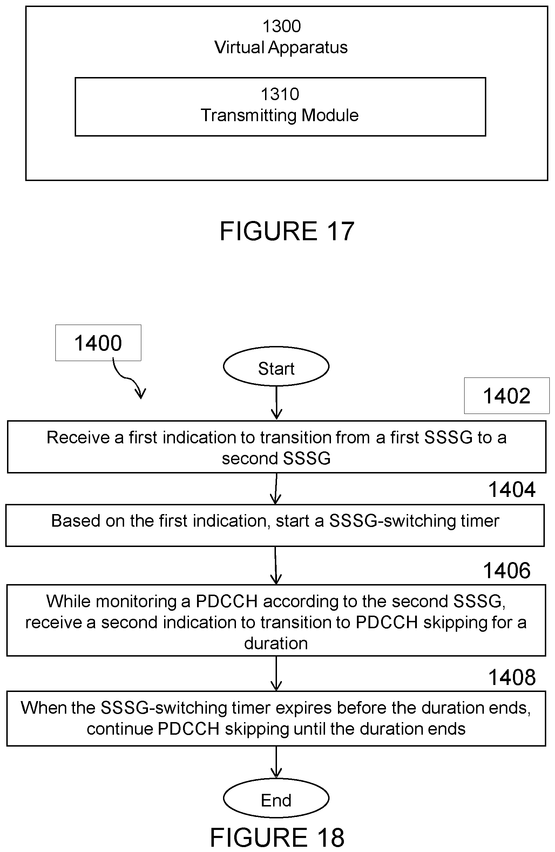

FIGURE 17 illustrates a schematic block diagram of a virtual apparatus 1300 in a wireless network (for example, the wireless network shown in FIGURE 3). The apparatus may be implemented in a wireless device or network node (e.g., wireless device 110 or network node0 shown in FIGURE 3). Apparatus 1300 is operable to carry out the example method described with reference to FIGURE 16 and possibly any other processes or methods disclosed herein. It is also to be understood that the method of FIGURE 16 is not necessarily carried out solely by apparatus 1300. At least some operations of the method can be performed by one or more other entities.

Virtual Apparatus 1300 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause transmitting module 1310 and any other suitable units of apparatus 1300 to perform corresponding functions according one or more embodiments of the present disclosure.

According to certain embodiments, transmitting module 1310 may perform certain of the transmitting functions of the apparatus 1300. For example, transmitting module 1310 may transmit, to a wireless device, an indication to transition the wireless device from a first PDCCH monitoring state for monitoring a PDCCH to a second PDCCH monitoring state for monitoring the PDCCH.

Optionally, in particular embodiments, virtual apparatus may additionally include one or more modules for performing any of the steps or providing any of the features in the Group B, Group D, and Group E Example Embodiments described below.

### ADDITIONAL INFORMATION

DCCH) monitoring is one contributing factor to wireless device power consumption in cellular systems such as system based on 3GPP 5^{th} Generation (5G, also referred to as NR) wireless communication standards. DRX is an important mechanism that allows reduction in wireless device power consumption by allowing the wireless device to sleep (e.g., go to DRX which may reduce/omit PDCCH monitoring) or to monitor PDCCH based during "active time," etc.

Active time typically includes the time duration when a DRX ON duration timer and/or a DRX Inactivity timer is running, and in which the wireless device monitors PDCCH. Since packet inter-arrival time is typically an unknown quantity, to avoid unnecessary packet delays, it may be preferable to let a wireless device monitor PDCCH for a certain duration after receiving a packet (e.g., to receive a future packet), rather than allowing the wireless device to immediately go to sleep. This is achieved using the Inactivity timer (IAT) which can be set to a reasonably large value (e.g., 200ms for a DRX cycle of length 320ms) and allows the wireless device to be awake for a certain duration after receiving a packet. However, use of the IAT can also lead to increased power consumption especially when the IAT value is very large.

To allow the wireless device to save power during active time, several techniques have been discussed, including PDCCH search space set (SS) group switching (also referred to as search space set switching), and PDCCH skipping, which are described below.

Two groups of search space sets for a cell can be configured in 3GPP Release (Rel)-16. If configured (through the RRC parameters *searchSpaceGroupIdList-r*16 and *searchSpaceSwitchingGroup-r16),* then the wireless device can be switched between these two groups of search space sets using either explicit or implicit mechanisms. Some search spaces may not appear in the search space sets. Such search spaces can be always and/or continuously monitored, and monitoring of such search spaces is not impacted by the search space set switching mechanism.

The wireless device can be switched between the two search space groups through detection of a DCI format 2_0. This is performed by configuring the wireless device with the RRC parameter *searchSpaceSwitchTrigger-r16* which provides a location for the search space set group switching field (for a serving cell) in the DCI format 2_0. The search-space-set- switching field is one bit in size, where a bit value of zero indicates one group and a value of one indicates the second group. We refer to these two groups by group0 and group 1, where the search-space-set-switching field takes the values zero and one, respectively.

The procedure for explicit switching using DCI format 2_0 is as follows:
- If the wireless device is not monitoring PDCCH on search space sets corresponding to group0 and the wireless device detects DCI format 2_0. Then the wireless device switches to search space sets of group0 provided the search-space-set-switching field indicates a value of zero, and stops monitoring PDCCH on search space sets associated with group 1.
- If the wireless device is not monitoring PDCCH on search space sets corresponding to group 1 and the wireless device detects DCI format 2_0, then the wireless device switches to search space sets of group 1 provided the search-space-set--switching field indicates a value of one. The wireless device also stops monitoring PDCCH on search space sets corresponding to group0 and starts a timer with a duration provided by the *searchSpaceSwitchingTimer.*
- If the wireless device is monitoring PDCCH on search space sets corresponding to group1, then the wireless device switches (or starts monitoring on) to search space sets of group0 and stops monitoring on group1 at either expiration of the *searchSpaceSwitchingTimer* or at the last slot of a remaining channel occupancy duration for the serving cell that is indicated by DCI format 2_0.

Implicit switching occurs when the wireless device is not configured with the RRC *searchSpaceSwitchTrigger-r16* parameter. The procedure is as follows:
- if the wireless device detects a DCI format in group0, the wireless device switches to monitoring PDCCH according to SS set in group1 on the serving cell at a first slot that is at least P symbols after the slot in the active downlink (DL) bandwidth part (BWP). The wireless device sets the timer value to the value provided by *searchSpaceSwitchingTimer-r16* if the wireless device detects a DCI format by monitoring PDCCH in any search space set. This applies to every subsequent detection of a DCI in any search space where if the timer is running, the wireless device restarts the timer.
- if the wireless device monitors SS sets in group1, the wireless device switches to monitoring SS sets in group0 at the beginning of the first slot that is at least P symbols after a slot where the timer expires or, if the wireless device is provided a search space set for DCI format 2_0, after a last slot of a remaining channel occupancy duration for the serving cell that is indicated by DCI format 2_0. This implies that even in the implicit case, it is still possible to enforce a set switch from group 1 to group 0 given that the wireless device has been configured with a search space configuration for DCI format 2_0. However, note that DCI format 2_0 is configured in the common search space and potentially affects group transitions for all wireless devices with the same SFI-RNTI decoding the DCI, i.e., the set switching is not controlled on a wireless device-basis.

A wireless device can be configured with up to 10 search space sets per cell. Cell groups are defined for SS set switching such that if SS switching is triggered for one cell in the group of cells, it also triggers SS switching for all cells in the corresponding group. In 3GPP Rel-16, up to four groups of cells can be supported, and these can be indicated using DCI format 2_0.

The search space set switching triggering indication can also be provided in scheduling DCI such as DCI 1-1 that schedules downlink data (e.g., PDSCH) or DCI 0-1 that can schedule uplink data (e.g., PUSCH).

In PDCCH skipping, the wireless device can be configured with a bitfield within one of the scheduling DCIs to indicate a duration during which the wireless device can skip decoding of PDCCH. For example, the wireless device can be configured with a time duration of 4ms, and when the PDCCH skipping bit within a DCI is set to 1, the wireless device can skip PDCCH monitoring for next 4 ms. Typically, the wireless device may skip PDCCH monitoring for a particular set of search spaces and RNTIs, for example, the wireless device may skip monitoring of all wireless device-specific search space sets, and/or monitoring of wireless device-specific RNTIs, such as C-RNTI, CS-RNTI, etc.

However, existing solutions for PDCCH monitoring reduction mechanisms, such as search space set group switching and PDCCH skipping, are individually applied, i.e., are applied independent of each other. This may create inefficiencies such as in a carrier aggregation scenario.

Some embodiments advantageously provide methods, systems, and apparatuses for modification of physical downlink control channel (PDCCH) monitoring.

A method of joint L1 indication of search space set switching and PDCCH skipping is described herein. Also described herein is a method of efficient control of the PDCCH monitoring adaption when the wireless device is configured with carrier aggregation, as well as for cases when the wireless device is configured with dormant BWP for some SCells and search space set switching for some SCells.

As described above, existing systems lack methods to efficiently combine the search-space set group switching and PDCCH skipping framework for a given wireless device, especially when the wireless device is configured multiple carriers in a carrier aggregation scenario. The present disclosure advantageously solves at least a portion of the problems with existing systems by providing methods and mechanisms to provide the wireless device with the opportunity to reduce PDCCH monitoring during active time of C-DRX using both search-space set group switching and PDCCH skipping mechanisms, thereby achieving power savings. One or more embodiments described herein also reduce the PDCCH resources at the network node side e.g., by allowing the network node to indicate PDCCH monitoring adaptions for a group of cells in an efficient manner. Furthermore, one or more embodiments described herein provide the network node with the flexibility to choose flexibly between search space set group switching or PDCCH skipping depending on the traffic situation, data arrival patterns, latency, etc.

Before describing in detail example embodiments, it is noted that the embodiments reside primarily in combinations of apparatus components and processing steps related to modification of PDCCH monitoring. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

A cell may be generally a communication cell, e.g., of a cellular or mobile communication network, provided by a node. A serving cell may be a cell on or via which a network node (the node providing or associated to the cell, e.g., base station, gNB or eNodeB) transmits and/or may transmit data (which may be data other than broadcast data) to a user equipment, in particular control and/or user or payload data, and/or via or on which a user equipment transmits and/or may transmit data to the node; a serving cell may be a cell for or on which the user equipment is configured and/or to which it is synchronized and/or has performed an access procedure, e.g., a random access procedure, and/or in relation to which it is in a RRC_connected or RRC_idle state, e.g., in case the node and/or user equipment and/or network follow the LTE-standard. One or more carriers (e.g., uplink and/or downlink carrier/s and/or a carrier for both uplink and downlink) may be associated to a cell.

Transmitting in downlink may pertain to transmission from the network or network node to the wireless device. Transmitting in uplink may pertain to transmission from the wireless device to the network or network node. Transmitting in sidelink may pertain to (direct) transmission from one wireless device to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Configuring a terminal or wireless device or node may involve instructing and/or causing the wireless device or node to change its configuration, e.g., PDCCH monitoring configuration. A terminal or wireless device or node may be adapted to configure itself, e.g., according to information or data in a memory of the terminal or wireless device. Configuring a node or terminal or wireless device by another device or node or a network may refer to and/or comprise transmitting information and/or data and/or instructions to the wireless device or node by the other device or node or the network such as via a bitfield described herein. Configuring a terminal may include sending configuration data to the terminal indicating which modulation and/or encoding to use.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

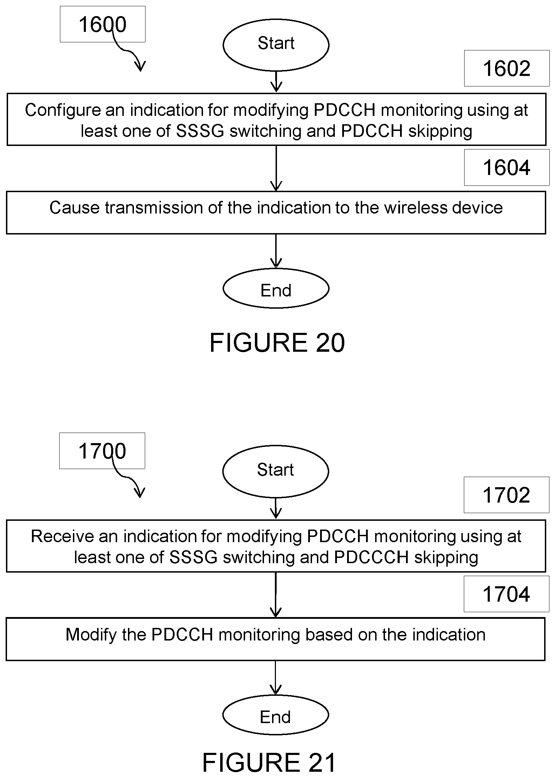

FIGURE 20 is a flowchart of an example process 1600 in a network node0 according to some embodiments of the present disclosure. One or more Blocks and/or functions performed by network node0 may be performed by one or more elements of network node0 such as by indication unit in processing circuitry, processor, radio interface, etc. In one or more embodiments, network node such as via one or more of processing circuitry, processor, indication unit, communication interface and radio interface is configured to configure (1602) an indication for modifying physical downlink control channel, PDCCH, monitoring using at least one of search space set group switching and PDCCH skipping, as described herein. In one or more embodiments, network node such as via one or more of processing circuitry 68, processor 70, indication unit 32, communication interface 60 and radio interface 62 is configured to cause transmission (1604) of the indication to the wireless device, as described herein.

According to one or more embodiments, the indication is a bitfield that indicates performing both the search space set group switching and PDCCH skipping. According to one or more embodiments, the bitfield is configured to control at least one of search space set group switching and PDCCH skipping for at least one group of cells. According to one or more embodiments, the bitfield is configured to control at least one of search space set group switching and PDCCH skipping for a first group of cells and separately for a second group of cells. According to one or more embodiments, the bitfield is one of a PDCCH monitoring adaptation bitfield and cell group indication bitfield.

FIGURE 21 is a flowchart of an example process 1700 in a wireless device 110 according to some embodiments of the present disclosure. One or more Blocks and/or functions performed by wireless device may be performed by one or more elements of wireless device such as by modification unit in processing circuitry 84, processor, radio interface, etc. In one or more embodiments, wireless device such as via one or more of processing circuitry, processor, modification unit and radio interface is configured to receive (1702) an indication for modifying physical downlink control channel, PDCCH, monitoring using at least one of search space set group switching and PDCCH skipping, as described herein. In one or more embodiments, wireless device such as via one or more of processing circuitry, processor 86, modification unit and radio interface is configured to modify (1704) the PDCCH monitoring based on the indication, as described herein.

According to one or more embodiments, the indication is a bitfield that indicates performing both the search space set group switching and PDCCH skipping. According to one or more embodiments, the bitfield is configured to control at least one of search space set group switching and PDCCH skipping for at least one group of cells. According to one or more embodiments, the bitfield is configured to control at least one of search space set group switching and PDCCH skipping for a first group of cells and separately for a second group of cells. According to one or more embodiments, the bitfield is one of a PDCCH monitoring adaptation bitfield and cell group indication bitfield.

Having generally described arrangements for modifying of PDCCH monitoring, details for these arrangements, functions and processes are provided as follows, and which may be implemented by the network node, wireless device and/or host computer.

Some embodiments provide modifying of PDCCH monitoring. Arrangements for joint control of search space set group switching and PDCCH skipping are described in detail herein. Note that when reference to DRX is made herein, this reference may include at least connected mode DRX (C-DRX). Such a DRX configuration typically includes an ON duration timer value, an inactivity timer value, and a long or short DRX cycle. In cases where short DRX cycle is configured, the configuration may additionally include a short DRX timer value.

A wireless device is configured with DRX, and with at least one primary cell that may be provided by network node. The wireless device can be configured with one or more secondary cells that may be provided by the network node and/or another network node. Wireless device can be configured with at least two search space set groups for at least one cell. Wireless device can be further configured with a skip duration for the at least one cell. Wireless device such as via one or more of processing circuitry, processor, radio interface, modification unit, etc., can be configured to monitor a downlink control information on at least one cell containing at least a bitfield that can take field values indicating the wireless device to monitor PDCCH according to a first search space set group (SSSG#0), or to monitor PDCCH according to a second search space set group (SSG#1), and to skip PDCCH monitoring for a duration indicated by the higher layers, or pre-configured, e.g., in standardization documentations such as in 3GPP. The bitfield can be referred to as PDCCH monitoring adaptation bitfield.

An example of the bitfield is shown in below in TABLE 1. The bitfield has 2 bits. The four resulting states can each indicate different wireless device behavior regarding PDCCH monitoring adaptation. For example, the field value 01 can indicate that the wireless device start to monitor PDCCH according to search space sets in SSSG#0 (and stop PDCCH according to search space sets in SSSG#1). For example, the field value can indicate that the wireless device such as via one or more of processing circuitry, processor, radio interface, modification unit, etc., start to monitor PDCCH according to search space sets in SSSG#1 (and stop PDCCH according to search space sets in SSSG#0). For example, the field value indicate for wireless device such as via one or more of processing circuitry, processor, radio interface, modification unit, etc., skipping PDCCH monitoring for a time duration given by the skip duration. For example, the field value 00 can indicate "reserved", for example to indicate that there is no change to wireless device's behavior with respect to PDCCH monitoring.

**TABLE 1**

| *PDCCH Monitoring adaptation bit field value* | | WD behavior |
|---|---|---|
| | 00 | No change or 'reserved' |
| | 01 | Monitor SSSG#0 |
| | 10 | Monitor SSSG#1 |
| | 11 | Skip PDCCH monitoring for a skip duration |

In one or more embodiments, the downlink control information containing the bitfield (e.g., PDCCH monitoring adaptation bitfield) is received by wireless device on a first serving cell, and the corresponding PDCCH monitoring adaptation is applicable for PDCCH monitoring on the first serving cell.

In one or more embodiments, the DCI bitfield is configured explicitly through higher layer signaling, e.g., RRC signaling, such as by network node. For example, the associated DCI may be a non-fallback scheduling DCI format 0-1, 1-1, 1-2, or 0-2. In one approach, wireless device can be configured through RRC signaling such as by network node with the PDCCH monitoring adaptation bitfield, and furthermore through RRC signaling, wireless device can be configured if one or all the specific indications are configured. For example, the network node such as via one or more of processing circuitry, processor, radio interface, indication unit, etc. may only configure PDCCH skipping and not SS switching on a first serving cell, and thus network node only configures wireless device with the bitfield associated with PDCCH skipping.

On the other hand, network node such as via one or more of processing circuitry, processor, radio interface, indication unit, etc., may configure PDCCH skipping and SS switching on a second serving cell, and thus wireless device is configured with all the indications mentioned in example above with respect to the configured bitfield. In another example, network node such as via one or more of processing circuitry, processor, radio interface, indication unit, etc., can configure the PDCCH monitoring adaptation bitfield in the same manner for all the valid DCIs, or to configure the bitfield individually for each valid DCI. For example, network node such as via one or more of processing circuitry, processor, radio interface, indication unit, etc., may configure the PDCCH monitoring adaptation bitfield in DCI formats 1-1 and 0-1, and not in DCI format 1-2 or 0-2, since these two DCIs may be used for latency sensitive application. Alternatively, network node such as via one or more of processing circuitry, processor, radio interface, indication unit, etc., may configure all the fields in the adaptation bitfield for DCI formats 1-1 and 0-1, but may not configure PDCCH skipping for DCI formats 1-2 and 0-2, for example to avoid skipping PDCCH for latency sensitive applications.

In another embodiment, the wireless device can be configured with the PDCCH monitoring adaption bitfield by pre-configuration or a combination of pre-configuration and higher layer signaling from network node. For example, if wireless device such as via one or more of processing circuitry, processor, radio interface, modification unit, etc., receives a first configuration which meets a first condition, wireless device may then configure the PDCCH monitoring adaptation bitfield, or if the first configuration meets a second condition, then wireless device configures a subset of PDCCH monitoring bitfield and consider the rest as reserved or no change. In one example of this embodiment, wireless device is configured such as by network node with one or more search spaces (SSs) as the first configuration. In one approach, if any of the configured SSs is additionally configured as part of the first or second search space set groups (as the first condition), wireless device may assume the PDCCH monitoring adaptation field is present in the DCIs associated to the SSs, or all the potential DCIs which can be used for SS switching/PDCCH skipping. In a subset realization of this approach, wireless device can be further configured with the skip PDCCH monitoring indication field also or to consider it as reserved if received. In another example, the wireless device may not be configured with search space set groups, but receives an indication from the higher layers configuring the PDCCH skipping indication in the PDCCH monitoring adaptation bitfield. In this case, wireless device consider the search space set group switching bitfield either as reserved or no change.

In another embodiment, network node may not transmit the PDCCH monitoring adaption bitfield even if configured. In this case, in one example, the wireless device such as via one or more of processing circuitry, processor, radio interface, modification unit, etc., receives a first DCI containing the monitoring adaptation bitfield, and thus the wireless device follows the indication in the DCI. Then, wireless device such as via one or more of processing circuitry, processor 86, radio interface, modification unit, etc., receives a second DCI which could potentially include the bitfield as well, but wireless device does not receive the bitfield. In this case, wireless device behavior can be either configured by higher layer signaling from network node, or pre-configured such as by the network or network node. For example, if wireless device does not receive the PDCCH monitoring adaptation bitfield in a second DCI, then wireless device does not make any change, or wireless device follows a configured behavior, e.g., falling back to the first search space set group.

When wireless device is configured with carrier aggregation, the PDCCH monitoring adaptation can be further enhanced as described below.

### Joint indication with carrier aggregation (CA) and grouping of cells

Wireless device can be configured with multiple serving cells such as cells belonging to frequency range 1 and/or frequency range 2 (FR1/FR2). The PDCCH monitoring adaptation can be configured such that a group of cells can be controlled using a single field. For example, wireless device can be configured with a first group of cells, and a second group of cells, and the PDCCH monitoring adaptation can be configured and controlled individually for each group of the two group of cells.

Wireless device can be configured to monitor a downlink control information on at least one cell containing at least a bitfield that can take field values indicating for wireless device to monitor PDCCH according to a first search space set group on the first group of cells, and to monitor PDCCH according to a second search space set group on the first group of cells, and to skip PDCCH monitoring on the first group of cells for a duration indicated by the higher layers. Wireless device such as via one or more of processing circuitry, processor 86, radio interface, modification unit, etc., detects a downlink control information, determines whether to monitor PDCCH and determines the search spaces to monitor based on the detected DCI, and monitors downlink control channel accordingly, and receives a downlink message in the downlink control channel.

The DCI transmitted by, for example, network node, can contain at least a second bitfield that can take field values indicating for wireless device to monitor PDCCH according to a first search space set group on the second group of cells, and to monitor PDCCH according to a second search space set group on the second group of cells, and to skip PDCCH monitoring on the second group of cells for a duration indicated by the higher layers.

In certain embodiments, wireless device can be configured with a first grouping of cells for the search-space set group switching and a second grouping of cells for the PDCCH skipping. For example, if wireless device has/is configured with four cells (c0,c1,c2,c3), then for search space set group switching, the first group can comprise c0, and the second group can comprise c1,c2,c3, while for PDCCH skipping, the first group can include c0,c1, and the second group can comprise c2,c3.

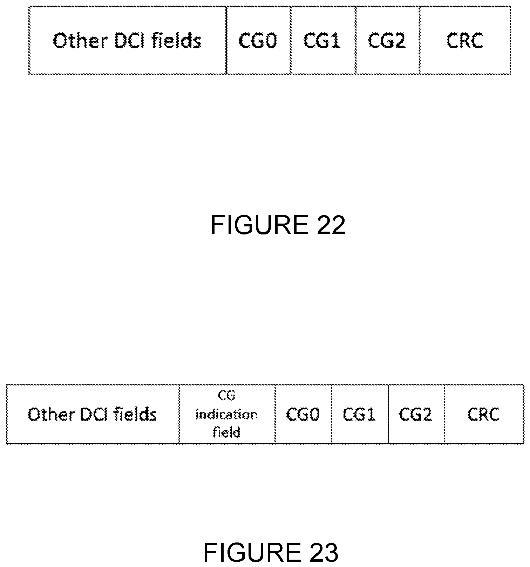

An example DCI format is shown in FIGURE 22 where different bitfields are configured in a DCI to control PDCCH monitoring adaptation for different cells. FIGURE 22 illustrates three different bitfields (CG0, CG1, CG2) to control search space set group switching and/or PDCCH skipping for three different groups of cells. Each field CG0 can control search space set group switching and/or PDCCH skipping for a group of cells configured by higher layers. For example, if wireless device is configured with FR1-FR2 carrier aggregation, a first cell group CG0 may contain the primary cell, a second cell group may contain the secondary serving cells belonging to FR1, and a third cell group may contain the secondary serving cells belonging to FR2.

Each field (e.g., CG0) corresponding to each group (first group of cells) can indicate four values for each group of cells, as shown in below in TABLE 2.

**TABLE 2**

| *PDCCH Monitoring adaptation bit field value* | WD behavior |
|---|---|
| 00 | No change or 'reserved' for the group of cells |
| 01 | Monitor SSSG#0 for the group of cells |
| 10 | Monitor SSSG#1 for the group of cells |
| 11 | Skip PDCCH monitoring for a skip duration for the group of cells |

For example, wireless device can be configured with a first group of cells, and a second group of cells associated with search space set group switching. Wireless device can be configured with a third group of cells to skip PDCCH monitoring. In an embodiment, the third group of cells includes all serving cells configured for wireless device. For example, the wireless device such as via one or more of processing circuitry, processor, radio interface, modification unit, etc., can receive a configuration from higher layers that a first, a second and a third bitfields associated with a first, a second and a third group of cells is configured, and further, the higher layer signaling can indicate the starting location of each bitfield or their length (in case the length of the bitfields are configurable or different). The first, second and third bitfields may each be considered a PDDCH monitoring adaptation bitfield or may be considered to be part of the overall PDCCH monitoring adaption bitfield.

In one embodiment, network node is not required to transmit the associated bitfields all the time even if configured. For example, wireless device such as via one or more of processing circuitry, processor, radio interface, modification unit, etc., may receive bitfield corresponding to CG0, but not CG1 and CG2. In this case, wireless device either adopts a behavior which is configured through higher layer signaling, or a pre-configured, e.g., default behavior. The default behavior can be, for example, no change in behavior for the corresponding group of cells. For example, wireless device such as via one or more of processing circuitry, processor, radio interface, modification unit, etc., may receive CG0, but not CG1 and CG2. As such, wireless device implements the indication in CG0, but does not change the behavior in CG1 and CG2, otherwise wireless device is configured differently from higher layers, e.g., to fall back to the first search space group.

In another embodiment, the presence or absence of the bitfields associated with the CGs can be indicated with another bitfield, e.g., a CG indication bitfield. An example illustration is illustrated in FIGURE 23 where different bitfields configured in a DCI to control PDCCH monitoring adaptation for different cell groups as well as a CG indication bitfield to activate or deactivate a specific CG PDCCH monitoring adaption bitfield are illustrated.

Wireless device may be configured to monitor three bits given by CG indication bitfield, corresponding to CG0, CG1 and CG2. Each bit in the indication bitfield can indicate to wireless device which of the CG PDCCH monitoring adaption bitfields are transmitted. For example, wireless device may receive CG indication bitfield set to indicating that only information about CG0 is transmitted but not CG1 and CG2, or indicating information about CG0 and CG1 are transmitted but not CG2, or 001 indicating information about only CG2 is transmitted and so on. The advantage of this approach is to reduce the number of transmitted bits if network node does not want to change the PDCCH monitoring in a specific CG.

Wireless device can be configured to monitor a downlink control information on at least one cell containing at least a bitfield that can take field values indicating wireless device to skip PDCCH monitoring according to a first skip duration on a first group of cells, and, to skip PDCCH monitoring according to a second skip duration on a second group of cells, where the grouping of cells is configured by higher layers. The first and second skip durations are also configured by higher layers. Wireless device such as via one or more of processing circuitry 84, processor, radio interface, modification unit, etc., detects a downlink control information, determines a PDCCH skip duration based on the detected DCI, skips PDCCH decoding on the corresponding group of cells, monitors downlink control channel accordingly after the skip duration, and receive a downlink message in the downlink control channel.

In certain embodiments, only the special cell (e.g., primary cell in the MCG or the primary cell in SCG) can be configured to carry the PDCCH monitoring adaptation bitfield for the different group of cells, or alternatively, the bitfield can be present in the DCI scheduling the primary cell only. In yet another embodiment, the PDCCH monitoring adaptation bitfield carried in a scheduling DCI for a secondary serving cell can adapt PDCCH monitoring for the secondary serving cell only.

In some embodiments, the PDCCH monitoring adaptation bitfield corresponds to the bitfield that jointly indicates search space set group switching and PDCCH skipping. In some embodiments, the PDCCH monitoring adaptation bitfield corresponds to the bitfield that can indicate at least one of search space set group switching and PDCCH skipping.

In some embodiments, a cell x (e.g., primary cell in the MCG or the primary cell in SCG) can be configured to adapt PDCCH monitoring for a group of cells (e.g., carry the PDCCH monitoring adaptation bitfield for the different group of cells), or for a single cell (e.g., same as cell), and the downlink control information includes an indication to indicate whether the bitfield adapts PDCCH monitoring for a group of cells or itself.

Note that embodiments described herein are applicable to cases that wireless device is not configured with cross-carrier scheduling for one or more secondary cells, as well as the ones that wireless device is configured with cross-carrier scheduling for one or more secondary cells. For example, wireless device may be configured with a first secondary cell and a second secondary cell, where the first secondary cell is additionally configured to be scheduled from the primary cell. Furthermore, wireless device is configured with PDCCH monitoring adaptation of all the secondary cells from the primary cell. In this case, in one example, wireless device can be configured with PDCCH monitoring adaption bitfields in all the associated scheduling DCIs received in the primary cell for all the cells. In another example, the first secondary cell PDCCH monitoring adaption is only configured to be handled through the DCIs received in primary cell to schedule the secondary cells, and the PDCCH monitoring adaptation of primary cell and the second secondary cell are handled through scheduling DCIs intended for the primary cell.

### Interaction with SCell dormancy

In certain embodiments, wireless device may be configured such as by, for example, network node, with an explicit higher layer parameter indicating to use the dormancy framework to enable PDCCH monitoring adaptation according search space set group switching. For example, wireless device can be configured such as by network node with at least some serving cells that are not configured with a dormant BWP (e.g., FR1 secondary serving cells), and some serving cells that are configured with a dormant BWP (e.g., FR2 secondary serving cells). Wireless device can be configured to use SCell dormancy bitfields, where for a first group of cells for which there is no dormant BWP, the SCell dormancy bit can be reinterpreted as indicating to monitor PDCCH according to a first search space set group on the first group of cells, or to monitor PDCCH according to a second search space set group on the first group of cells. Wireless device can be configured to use SCell dormancy bitfields, where for a first group of cells for which there is no dormant BWP, the SCell dormancy bit can be reinterpreted as indicating to skip PDCCH monitoring for a first skip duration on the first group of cells.

When wireless device is explicitly configured with scheduling DCI based format search space group switching functionality, wireless device such as via one or more of processing circuitry, processor, radio interface, modification unit, etc., does not apply any search space set group switching based on DCI 2_0. Wireless device may still be configured with a timer value, that allows wireless device to switch between the first search space group and the second search space group.

Note that some embodiments described herein focus on including the PDCCH monitoring adaption through scheduling DCIs. Nevertheless, the same methods and mechanisms can be readily applied when PDCCH monitoring adaption is handled through non-scheduling DCIs, e.g., DCI format 2-6 or DCI format 1-1 that does not schedule PDSCH.

In some cases, wireless device may be configured for SSSG switching only on the primary cell or sPCell.

In one embodiment, wireless device is configured with multiple serving cells (e.g., c0,c1,c2). For some or all of the multiple serving cells, wireless device is configured with multiple search space groups (SSGs). For example, for each cell, wireless device may be configured with a SSSG0 with SS sets having frequent PDCCH monitoring (e.g., PDCCH monitored every slot) and a SSSG1 with SS sets having sparse PDCCH monitoring (e.g., PDCCH monitored every N slots, N configured by higher layers with values e.g., 4 ,8, 20 etc.). On a first serving cell of the multiple serving cells, wireless device may detect a first DCI indicating whether to monitor PDCCH for the first serving cell according a first SSG or a second SSG of the multiple SSGs. For example, wireless device may on cell c1 detect the first DCI in slot x indicating it to monitor PDCCH according to SSG1 and in response start monitoring PDCCH on c1 according SSG1 (e.g., once every N slots) in slots later than slot x. On a second serving cell of the multiple serving cells (e.g., c0), wireless device may detect a second DCI indicating whether to monitor PDCCH for the first serving cell according the first SSG or the second SSG of the multiple SSGs. For example, wireless device may on cell c0 detect the second DCI in slot y indicating it to monitor PDCCH in cell c1 according to SSG0, and in response start monitoring PDCCH on c1 according SSG0 (e.g., once every slot) in slots of c1 later than slot y. With this framework, PDCCH monitoring on a first serving cell can be adapted from frequent to sparse using DCI on the same first serving cell, but when required, DCI on another second cell (with frequent PDCCH monitoring) can be used to switch the PDCCH monitoring from sparse to frequent. Such operation reduces the latency for data scheduling by making the first serving cell available sooner without waiting for PDCCH opportunities provided by sparse PDCCH monitoring SSG. In some cases, the second serving cell that indicates SSG switch for first serving cell can be the sPCell. In some other cases, the second serving cell can be configured via RRC. In cases where wireless device receives first DCI and second DCI in slots that overlap in time, wireless device may follow an indication in one of the DCIs according to a priority rule (e.g., DCI on sPCell is always prioritized, DCI on first cell (i.e., same cell) is prioritized, DCI on second cell (i.e., different cell) is prioritized.

Therefore, in one or more embodiments, one or more methods using a single bitfield to enable both search space set group switching and PDCCH skipping are provided. The bitfield may be configured by network node. Further, one or more methods of simultaneously using cells groups-based PDCCH monitoring adaptation indication on primary cell and individual cell-based PDCCH monitoring adaptation on respective secondary cells are provided.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

The scope of the present invention is determined by the scope of the appended claims.

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

The scope of the present invention is determined by the scope of the appended claims.

## Claims

1. A method performed by a wireless device configured with at least a first search-space set group, SSSG, and a second SSSG, the method comprising:
receiving a first indication to transition from the first SSSG to the second SSSG;
based on the first indication, starting a SSSG-switching timer;
while monitoring a PDCCH according to the second SSSG, receiving a second indication to transition to PDCCH skipping for a duration;
when the SSSG-switching timer expires before the duration ends, continuing PDCCH skipping until the duration ends.

2. The method of Claim 1, further comprising:
after the duration expires, switching to the first SSSG.

3. The method of any one of Claims 1 to 2, wherein the first SSSG has fewer PDCCH monitoring occasions than the second SSSG.

4. The method of any one of Claims 1 to 3, further comprising:
while the UE is performing PDCCH skipping, transmitting an uplink transmission; and
switching to monitoring the PDCCH according to the first SSSG or the second SSSG.

5. The method of Claim 4, wherein the uplink transmission comprises a scheduling request, SR.

6. The method of any one of Claims 1 to 5, further comprising:
prior to receiving the second indication, receiving a configuration for PDCCH skipping, via a Radio Resource Control, RRC, message, and
wherein the configuration comprises the duration.

7. The method of any one of Claims 1 to 6, wherein the wireless device monitors the PDCCH while in the first SSSG or the second SSSG, and wherein the wireless device does not monitor the PDCCH while in PDCCH skipping.

8. The method of any one of Claims 1 to 7, wherein at least one of the first indication and the second indication is received via downlink control information, DCI.

9. A method performed by a network node comprising:
configuring a wireless device with at least a first search-space set group, SSSG, and a second SSSG,
transmitting, to the wireless device, a first indication to transition from the first SSSG to the second SSSG;
based on the first indication, starting a SSSG-switching timer;
while the wireless device is monitoring a Physical Downlink Control Channel, PDCCH, according to the second SSSG, transmitting a second indication to transition to PDCCH skipping for a duration;
determining not to send PDCCH to the wireless device during the duration; and
when the SSSG-switching timer expires before the duration ends, determining to continue to not send PDCCH during the duration.

10. The method of Claim 9, wherein the first SSSG has fewer PDCCH monitoring occasions than the second SSSG.

11. The method of any one of Claims 9 to 10, further comprising:
after the duration expires, transmitting PDCCH.

12. A wireless device configured with at least a first search-space set group, SSSG, and a second SSSG, the wireless device adapted to:
receive a first indication to transition from the first SSSG to the second SSSG;
based on the first indication, start a SSSG-switching timer;
while monitoring a Physical Downlink Control Channel, PDDCH, according to the second SSSG, receive a second indication to transition to PDCCH skipping for a duration; and
when the SSSG-switching timer expires before the duration ends, continue PDCCH skipping until the duration ends.

13. The wireless device of Claim 12, adapted to perform any of the methods of Claims 2 to 8.

14. A network node adapted to:
configure a wireless device with at least a first search-space set group, SSSG, and a second SSSG,
transmit, to the wireless device, a first indication to transition from the first SSSG to the second SSSG;
based on the first indication, start a SSSG-switching timer;
while the wireless device is monitoring a Physical Downlink Control Channel, PDCCH, according to the second SSSG, transmit a second indication to transition to PDCCH skipping for a duration;
determine not to send PDCCH to the wireless device during the duration; and
when the SSSG-switching timer expires before the duration ends, determine to continue to not send PDCCH during the duration.

15. The network node of Claim 14, adapted to perform any of the methods of Claims 10 to 11.

## Patentansprüche

1. Verfahren, das durch eine drahtlose Vorrichtung durchgeführt wird, die mit mindestens einer ersten Suchraumsatzgruppe, SSSG, und einer zweiten SSSG konfiguriert ist, wobei das Verfahren Folgendes umfasst:
Empfangen einer ersten Angabe zum Übergehen von der ersten SSSG zu der zweiten SSSG;
basierend auf der ersten Angabe, Starten eines SSSG-Wechselzeitgebers;
während eines Überwachens eines PDCCH gemäß der zweiten SSSG, Empfangen einer zweiten Angabe zum Übergehen zu einem PDCCH-Überspringen für eine Dauer;
wenn der SSSG-Wechselzeitgeber abläuft, bevor die Dauer endet, Fortsetzen des PDCCH-Überspringens, bis die Dauer endet.

2. Verfahren nach Anspruch 1, ferner umfassend:
nachdem die Dauer abgelaufen ist, Wechseln zu der ersten SSSG.

3. Verfahren nach einem der Ansprüche 1 bis 2, wobei die erste SSSG weniger PDCCH-Überwachungsgelegenheiten aufweist als die zweite SSSG.

4. Verfahren nach einem der Ansprüche 1 bis 3, ferner umfassend:
während das UE ein PDCCH-Überspringen durchführt, Übertragen einer Uplink-Übertragung; und
Wechseln zum Überwachen des PDCCH gemäß der ersten SSSG oder der zweiten SSSG.

5. Verfahren nach Anspruch 4, wobei die Uplink-Übertragung eine Planungsanforderung, SR, umfasst.

6. Verfahren nach einem der Ansprüche 1 bis 5, ferner umfassend:
vor dem Empfangen der zweiten Angabe, Empfangen einer Konfiguration für das PDCCH-Überspringen über eine Funkressourcensteuerungsnachricht, RRC-Nachricht, und
wobei die Konfiguration die Dauer umfasst.

7. Verfahren nach einem der Ansprüche 1 bis 6, wobei die drahtlose Vorrichtung den PDCCH überwacht, während sie sich in der ersten SSSG oder der zweiten SSSG befindet, und wobei die drahtlose Vorrichtung den PDCCH während des PDCCH-Überspringens nicht überwacht.

8. Verfahren nach einem der Ansprüche 1 bis 7, wobei mindestens eine von der ersten Angabe und der zweiten Angabe über Downlink-Steuerinformationen, DCI, empfangen wird.

9. Verfahren, das durch einen Netzwerkknoten durchgeführt wird, umfassend:
Konfigurieren einer drahtlosen Vorrichtung mit mindestens einer ersten Suchraumsatzgruppe, SSSG, und einer zweiten SSSG,
Übertragen, an die drahtlose Vorrichtung, einer ersten Angabe zum Übergehen von der ersten SSSG zu der zweiten SSSG;
basierend auf der ersten Angabe, Starten eines SSSG-Wechselzeitgebers;
während die drahtlose Vorrichtung einen physikalischen Downlink-Steuerkanal, PDCCH, gemäß der zweiten SSSG überwacht, Übertragen einer zweiten Angabe zum Übergehen zu einem PDCCH-Überspringen für eine Dauer;
Bestimmen, den PDCCH während der Dauer nicht an die drahtlose Vorrichtung zu senden; und
wenn der SSSG-Wechselzeitgeber abläuft, bevor die Dauer endet, Bestimmen, weiterhin den PDCCH während der Dauer nicht zu senden.

10. Verfahren nach Anspruch 9, wobei die erste SSSG weniger PDCCH-Überwachungsgelegenheiten aufweist als die zweite SSSG.

11. Verfahren nach einem der Ansprüche 9 bis 10, ferner umfassend:
nachdem die Dauer abgelaufen ist, Übertragen des PDCCH.

12. Drahtlose Vorrichtung, die mit mindestens einer ersten Suchraumsatzgruppe, SSSG, und einer zweiten SSSG konfiguriert ist, wobei die drahtlose Vorrichtung zu Folgendem angepasst ist:
Empfangen einer ersten Angabe zum Übergehen von der ersten SSSG zu der zweiten SSSG;
basierend auf der ersten Angabe, Starten eines SSSG-Wechselzeitgebers;
während eines Überwachens eines physikalischen Downlink-Steuerkanals, PDCCH, gemäß der zweiten SSSG, Empfangen einer zweiten Angabe zum Übergehen zu einem PDCCH-Überspringen für eine Dauer; und
wenn der SSSG-Wechselzeitgeber abläuft, bevor die Dauer endet, Fortsetzen des PDCCH-Überspringens, bis die Dauer endet.

13. Drahtlose Vorrichtung nach Anspruch 12, die dazu angepasst ist, eines der Verfahren nach Anspruch 2 bis 8 durchzuführen.

14. Netzwerkknoten, der zu Folgendem angepasst ist:
Konfigurieren einer drahtlosen Vorrichtung mit mindestens einer ersten Suchraumsatzgruppe, SSSG, und einer zweiten SSSG,
Übertragen, an die drahtlose Vorrichtung, einer ersten Angabe zum Übergehen von der ersten SSSG zu der zweiten SSSG;
basierend auf der ersten Angabe, Starten eines SSSG-Wechselzeitgebers;
während die drahtlose Vorrichtung einen physikalischen Downlink-Steuerkanal, PDCCH, gemäß der zweiten SSSG überwacht, Übertragen einer zweiten Angabe zum Übergehen zu einem PDCCH-Überspringen für eine Dauer;
Bestimmen, den PDCCH während der Dauer nicht an die drahtlose Vorrichtung zu senden; und
wenn der SSSG-Wechselzeitgeber abläuft, bevor die Dauer endet, Bestimmen, weiterhin den PDCCH während der Dauer nicht zu senden.

15. Netzwerkknoten nach Anspruch 14, der dazu angepasst ist, eines der Verfahren nach Anspruch 10 bis 11 durchzuführen.

## Revendications

1. Procédé exécuté par un dispositif sans fil configuré avec au moins un premier groupe d'ensembles d'espaces de recherche, SSSG, et un second SSSG, le procédé comprenant :
la réception d'une première indication pour la transition du premier SSSG au second SSSG ;
sur la base de la première indication, le démarrage d'un temporisateur de commutation SSSG ;
lors de la surveillance d'un PDCCH selon le second SSSG, la réception d'une seconde indication pour la transition vers le saut de PDCCH pendant une durée ;
lorsque le temporisateur de commutation SSSG expire avant la fin de la durée, la continuation du saut de PDCCH jusqu'à la fin de la durée.

2. Procédé selon la revendication 1, comprenant en outre :
une fois la durée expirée, la transition au premier SSSG.

3. Procédé selon l'une quelconque des revendications 1 à 2, dans lequel le premier SSSG a moins d'occasions de surveillance PDCCH que le second SSSG.

4. Procédé selon l'une quelconque des revendications 1 à 3, comprenant en outre :
pendant que l'UE effectue un saut de PDCCH, la transmission d'une transmission en liaison montante ; et
la transition à la surveillance du PDCCH selon le premier SSSG ou le second SSSG.

5. Procédé selon la revendication 4, dans lequel la transmission en liaison montante comprend une demande de planification, SR.

6. Procédé selon l'une quelconque des revendications 1 à 5, comprenant en outre :
avant la réception de la seconde indication, la réception d'une configuration pour le saut de PDCCH, via un message de commande de ressources radio, RRC, et
dans lequel la configuration comprend la durée.

7. Procédé selon l'une quelconque des revendications 1 à 6, dans lequel le dispositif sans fil surveille le PDCCH pendant qu'il est dans le premier SSSG ou le second SSSG, et dans lequel le dispositif sans fil ne surveille pas le PDCCH pendant qu'il est en saut de PDCCH.

8. Procédé selon l'une quelconque des revendications 1 à 7, dans lequel au moins l'une de la première indication et de la seconde indication est reçue via des informations de commande de liaison descendante, DCI.

9. Procédé exécuté par un noeud de réseau comprenant :
la configuration d'un dispositif sans fil avec au moins un premier groupe d'ensembles d'espaces de recherche, SSSG, et un second SSSG,
la transmission, au dispositif sans fil, d'une première indication pour passer du premier SSSG au second SSSG ;
sur la base de la première indication, le démarrage d'un temporisateur de commutation SSSG ;
pendant que le dispositif sans fil surveille un canal de commande de liaison descendante physique, PDCCH, conformément au second SSSG, la transmission d'une seconde indication pour la transition au saut de PDCCH pendant une durée ;
la détermination de ne pas envoyer de PDCCH au périphérique sans fil pendant la durée ; et
lorsque le temporisateur de commutation SSSG expire avant la fin de la durée, la détermination de continuer à ne pas envoyer de PDCCH pendant la durée.

10. Procédé selon la revendication 9, dans lequel le premier SSSG a moins d'occasions de surveillance PDCCH que le second SSSG.

11. Procédé selon l'une quelconque des revendications 9 à 10, comprenant en outre :
une fois la durée expirée, la transmission du PDCCH.

12. Dispositif sans fil configuré avec au moins un premier groupe d'ensembles d'espaces de recherche, SSSG, et un second SSSG, le dispositif sans fil étant adapté pour :
recevoir une première indication pour la transition du premier SSSG au second SSSG ;
sur la base de la première indication, démarrer un temporisateur de commutation SSSG ;
lors de la surveillance d'un canal de commande de liaison descendante physique, PDDCH, selon le second SSSG, recevoir une seconde indication pour la transition au saut de PDCCH pendant une durée ; et
lorsque le temporisateur de commutation SSSG expire avant la fin de la durée, continuer le saut de PDCCH jusqu'à la fin de la durée.

13. Dispositif sans fil selon la revendication 12, adapté pour exécuter l'un quelconque des procédés des revendications 2 à 8.

14. Noeud de réseau adapté pour :
configurer un dispositif sans fil avec au moins un premier groupe d'ensembles d'espaces de recherche, SSSG, et un second SSSG,
transmettre, au dispositif sans fil, une première indication pour la transition du premier SSSG au second SSSG ;
sur la base de la première indication, démarrer un temporisateur de commutation SSSG ;
pendant que le dispositif sans fil surveille un canal de commande de liaison descendante physique, PDCCH, conformément au second SSSG, transmettre une seconde indication pour la transition au saut de PDCCH pendant une durée ;
déterminer de ne pas envoyer de PDCCH au périphérique sans fil pendant la durée ; et
lorsque le temporisateur de commutation SSSG expire avant la fin de la durée, déterminer de continuer à ne pas envoyer de PDCCH pendant la durée.

15. Noeud de réseau selon la revendication 14, adapté pour exécuter l'un quelconque des procédés des revendications 10 à 11.
